# EUROPEAN PATENT APPLICATION

(11) **EP 4 815 320 A1**
(43) Date of publication of application: **30.09.2026**
(21) Application number: 26164139.3
(22) Date of filing: 12.03.2026
(51) Int. Cl.: H04B 7/0417, H04B 7/06

(54) **TECHNOLOGIES FOR OCCUPANCY OF ARTIFICIAL INTELLIGENCE PROCESSING RESOURCES**

(30) Priority: 27.03.2025 US 202563779229 P
(71) Applicant: Apple Inc., Cupertino, CA 95014 (US)
(72) Inventor: NIU, Huaning, Cupertino, 95014 (US); EKBAL, Amal, Cupertino, 95014 (US); SUN, Haitong, Cupertino, 95014 (US); OTERI, Oghenekome, Cupertino, 95014 (US); SUBRAHMANYA, Parvathanathan, Cupertino, 95014 (US); CHEN, Wanshi, Cupertino, 95014 (US); ZENG, Wei, Cupertino, 95014 (US); YANG, Weidong, Cupertino, 95014 (US)
(74) Representative: Zacco Denmark A/S

(57) **Abstract**

The present application relates to devices and components including apparatus, systems, and methods for artificial intelligence processing capability.

## Description

### CROSS-REFERENCE TO RELATED APPLICATION

This application claims priority to U.S. Provisional Patent Application No. 63/779,229, entitled "TECHNOLOGIES FOR OCCUPANCY OF ARTIFICIAL INTELLIGENCE PROCESSING RESOURCES," filed on March 27, 2025, which is herein incorporated by reference in its entirety for all purposes.

### TECHNICAL FIELD

This application relates generally to communication networks and, in particular, to technologies for occupancy of artificial intelligence processing resources.

### BACKGROUND

Third Generation Partnership Project (3GPP) Technical Specifications (TSs) define standards for wireless networks. These TSs describe aspects related to signaling traffic through systems that incorporate wireless networks.

### BRIEF DESCRIPTION OF THE DRAWINGS

FIG. 1 illustrates a network environment in accordance with some embodiments.
FIG. 2 illustrates an example timeline for a periodic report, in accordance with some embodiments.
FIG. 3 illustrates an example timeline for an aperiodic report, in accordance with some embodiments.
FIG. 4 illustrates an example timeline for a semi-persistent report, in accordance with some embodiments.
FIG. 5 illustrates another example timeline for a aperiodic or semi-persistent report, in accordance with some embodiments.
FIG. 6 illustrates another example timeline for a periodic report or a semi-persistent report other than the initial report, in accordance with some embodiments.
FIG. 7 illustrates another example timeline for an aperiodic report or an initial semi-persistent report, in accordance with some embodiments.
FIG. 8 illustrates an example timeline for a positioning use case, in accordance with some embodiments.
FIG. 9 illustrates another example timeline for a positioning use case, in accordance with some embodiments.
FIG. 10 illustrates another example timeline for a aperiodic report or a semi-persistent report other than the initial report, in accordance with some embodiments.
FIG. 11 illustrates another example timeline for an aperiodic report or an initial semi-persistent report, in accordance with some embodiments.
FIG. 12 illustrates another example timeline for a periodic report or a semi-persistent report other than the initial report, in accordance with some embodiments.
FIG. 13 illustrates another example timeline for an aperiodic report or an initial semi-persistent report, in accordance with some embodiments.
FIG. 14 illustrates performance monitoring CSI reporting and UE-side model inference CSI reporting, in accordance with some embodiments.
FIG. 15A illustrates an RRC configuration for training data collection, in accordance with some embodiments.
FIG. 15B illustrates an RRC configuration for UE-side model inference, in accordance with some embodiments.
FIG. 16 illustrates an operation flow/algorithmic structure in accordance with some embodiments.
FIG. 17 illustrates another operation flow/algorithmic structure in accordance with some embodiments.
FIG. 18 illustrates a user equipment in accordance with some embodiments.
FIG. 19 illustrates a network device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component or asset within a computing or network environment, or a physical or virtual component within, accessible by, or available to an apparatus, circuitry, device, or component. Resources could include, but are not limited to, memory space/usage, processor/CPU time, processor/CPU usage, processor and accelerator loads, hardware time or usage, electrical power, input/output operations, ports or network sockets, channel/link allocations, throughput, or workload units. A "hardware resource" may refer to compute, storage, or networking resources provided by physical hardware elements. A "virtualized resource" may refer to compute, storage, or networking resources provided by virtualization infrastructure to an application, device, or system. The term "communication resource" may refer to resources that are accessible by, or available to, computer devices/systems for transferring information over a channel of a communication network. For example, communication resources may include, but are not limited to, time/frequency resources, code resources, modulation resources, etc. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

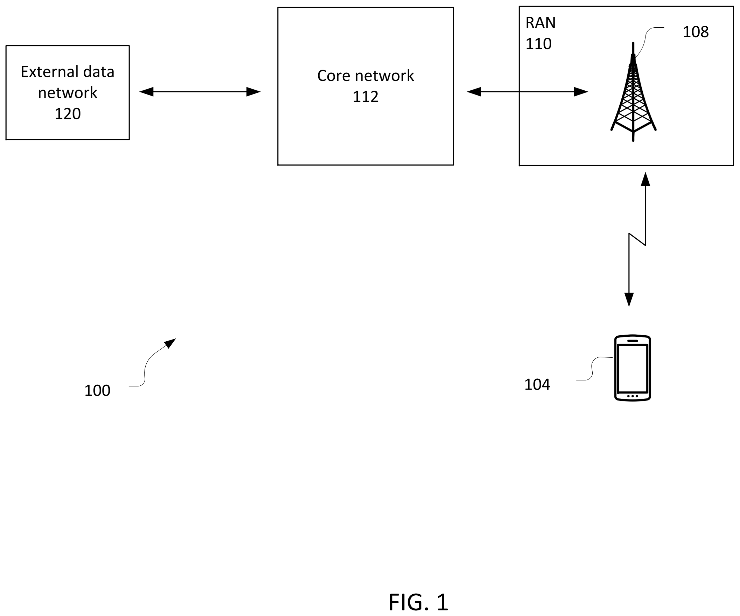

FIG. 1 illustrates a network environment 100 in accordance with some embodiments. The network environment 100 may include a user equipment (UE) 104 communicatively coupled with a base station 108 of a radio access network (RAN) 110. The UE 104 and the base station 108 may communicate over air interfaces compatible with 3GPP TSs such as those that define a Fifth Generation (5G) new radio (NR) system, a Sixth Generation (6G) system, or a later system. The base station 108 may provide user plane and control plane protocol terminations toward the UE 104.

The network environment 100 may further include a core network 112. For example, the core network 112 may comprise a 5G core network (5GC), a 6G core network (6GC), or later generation core network. The core network 112 may be coupled to the base station 108 via a fiber optic or wireless backhaul. The core network 112 may provide functions for the UE 104 via the base station 108. These functions may include managing subscriber profile information, subscriber location, authentication of services, or switching functions for voice and data sessions.

The network environment 100 may further include an external data network 120 with which the UE 104 may connect via the RAN 110. Data network 120 may include a system of interconnected nodes that facilitate data transmission between UE 104 and various application servers and other service providers. The base station 108 and the core network 112 may route application data between the UE 104 and external data network 120 or application servers. These application servers host web applications, cloud storage, and multimedia streaming services, which communicate with the UE 104 via standardized protocols and interfaces defined by 3GPP, ensuring secure and efficient data exchange.

Operations described herein as performed by a device (for example, UE 104, base station 108, and/or a device of core network 112) may be fully, substantially, or partially performed by processing circuitry implemented on the device. Additionally, operations described herein as performed by "the network" may be performed by a device of the RAN 110 (e.g., base station 108), a device of the core network 112, and/or components thereof.

In operation, the base station 108 may transmit downlink reference signals that the UE 104 measures to determine channel state information (CSI). The downlink reference signals may include CSI-reference signals (CSI-RSs) or synchronization signal blocks

(SSBs). The CSI may include a channel quality indicator (CQI), a rank indicator (RI), a precoding matrix indicator (PMI), an SSB resource indicator (SSBRI), a CSI-RS resource indicator (CRI), a layer indicator (LI), or layer 1-reference signal receive power (L1-RSRP). The base station 108 may use the CSI to support downlink transmissions on a physical downlink shared channel (PDSCH) and physical downlink control channel (PDCCH).

NR networks support three types of the CSI measurement resources. Periodic CSI measurement resources may include CSI-RS or SSB and may be configured and released by radio resource control (RRC) signaling. Semi-persistent CSI measurement resources may include CSI-RS and may be activated and deactivated by media access control (MAC)-control element (CE). Aperiodic CSI measurement resources may include CSI-RS and may be triggered by downlink control information (DCI).

NR networks support three types of CSI reports: aperiodic CSI reports, semi-persistent CSI reports, and aperiodic CSI reports.

The periodic CSI reports may be carried by a physical uplink control channel (PUCCH). The periodic CSI report may be both configured and released by RRC signaling. The periodic CSI report may rely on periodic measurement resources (for example, CSI-RS or SSB).

A first type of semi-persistent CSI report may also be carried by the PUCCH. The first type of semi-persistent CSI report may be activated and deactivated by MAC-CE. The first type of semi-persistent CSI report may rely on periodic measurement resources (for example, CSI-RS or SSB) or semi-persistent measurement resources (for example, CSI-RS).

A second type of semi-persistent CSI report may be carried by a physical uplink shared channel (PUSCH). The second type of semi-persistent CSI report may be activated and deactivated by DCI. The second type of semi-persistent CSI report may rely on periodic measurement resources (for example, CSI-RS or SSB) or semi-persistent measurement resources (for example, CSI-RS).

The aperiodic CSI report may be carried by the PUSCH and may be triggered by DCI. The aperiodic CSI report may rely on periodic measurement resources (for example, CSI-RS or SSB), semi-persistent measurement resources (for example, CSI-RS), or aperiodic measurement resources (for example, CSI-RS).

CSI processing constraints on the UE 104 may limit the number of CSI reports and/or CSI calculations the UE 104 is expected to handle at a given time. For example, Section 5.2.1.6 of 3GPP TS 38.214 v18.5.0 (2025-01-10) (hereinafter "TS 38.214") specifies that the UE indicates the number of supported simultaneous CSI calculations N_{CPU} with parameter *simultaneousCSI-ReportsPerCC* in a component carrier, and *simultaneousCSI-ReportsAllCC* across all component carriers. If a UE supports N_{CPU} simultaneous CSI calculations it is said to have N_{CPU} CSI processing units (CPUs) for processing CSI reports. The UE is not required to update requested CSI reports with a lowest priority when the associated number of CPUs exceeds the number of supported CPUs.

Additionally, CPU occupancy rules may be used to determine the time periods for which a CPU is considered occupied (e.g., in use) for an ongoing CSI process. For example, TS 38.214, Section 5.2.1.6 defines CPU occupancy with respect to reference signal configuration for periodic, semi-persistent, and aperiodic CSI reports.

In embodiments, the UE 104 and/or RAN 110 may perform calculations (e.g., inferences) using one or more artificial intelligence / machine learning (ML) models. For example, an AI/ML model may be used for CSI (e.g., CSI prediction, CSI-RS estimation, and/or CSI compression) and/or other use cases, such as beam management (e.g., beam prediction) and/or positioning. The AI/ML model may be a network-side model (e.g., implemented and/or managed by the network, such as base station 108, another device of RAN 110, or a device of core network 112) and/or a UE-side model (e.g., implemented and/or managed by the UE 104). In some embodiments, the AI/ML model may be implemented by an external device, such as a server, in communication with the UE 104 and/or RAN 110.

In embodiments, an AI processing unit (aiPU) may be defined to represent UE processing capabilities related to AI/ML calculations. For example, a UE may signal capability information associated with aiPUs that are supported by the UE for AI-related processing. In an example, the capability information may include a total number of aiPUs that are supported for AI-related processing and/or a number of aiPUs that are supported for a subset of one or more AI/ML use cases.

Various embodiments herein provide mechanisms to define an occupancy period of an aiPU. For example, embodiments may define the circumstances and/or time period for which an aiPU is considered occupied for purposes of counting as an active aiPU resource. In an example, the occupancy time for an aiPU may include a time during with an associated reference signal is received and/or measured (e.g., for a measurement used by the AI/ML model, such as for an inference). In another example, the occupancy time for an aiPU may not include the time during which the associated reference signal is received and/or measured. Embodiments further provide mechanisms to define aiPU occupancy when an AI/ML-related task is performed without an associated report, such as for collecting training data and/or performance monitoring for an AI/ML model.

Aspects of various embodiments herein may generally apply for a UE-side model. For a network-side model, the UE may perform measurements to be used by the model and report the measurements to the network. These occupancy of processing resources for these measurements and reports may be defined by extending the legacy CPU framework. Additionally, different mechanisms may be needed to define occupancy of aiPUs for a UE-side model.

In some embodiments, the aiPU occupancy may include the time during which a reference signal is received and/or measured. The aiPU occupancy may be based on a type of report, e.g., whether the report is a periodic, semi-persistent, or aperiodic report. For a semi-persistent report, different occupancy definitions may be used for the initial report upon triggering of semi-persistent reporting than for subsequent reports. The aiPU occupancy may additionally be based on a type of AI/ML function, such as whether a one-shot measurement is used for a report (e.g., a measurement on a single reference signal occasion for one or more reference signals) or whether measurements for a report are performed over a measurement window that includes multiple reference signal occasions for a given reference signal.

In an example, for an AI-related periodic report and/or a semi-persistent report (e.g., excluding an initial report on PUSCH after the PDCCH triggering the report), the associated aiPU(s) may be occupied from the first symbol of the earliest reference signal resource (e.g., CSI-RS, CSI-interference measurement (IM), and/or SSB) associated with the report (e.g., for a channel and/or interference measurement) until the last symbol of the message (e.g., PUSCH and/or PUCCH) that carries the report. For a one-shot measurement, the corresponding reference signal resources for the respective CSI-RS, CSI-IM, and/or SSB associated with the report may correspond to the latest reference signal occasion no later than a corresponding reference resource (e.g., CSI reference resource).

For an AI-related aperiodic report (e.g., CSI report), the associated aiPU(s) may be occupied from a first symbol after the PDCCH that triggers the aperiodic report until the last symbol of the PUSCH that carries the report.

For the initial report of an AI-related semi-persistent report, the associated aiPU(s) may be occupied from the first symbol after the message (e.g., PDCCH) that triggers the semi-persistent report until the last symbol of the PUSCH carrying the initial report. Accordingly, the initial semi-persistent report may follow the aiPU occupancy rules of an aperiodic report, and subsequent semi-persistent reports (e.g., triggered by the same triggering message) may follow the aiPU occupancy rules of a period report.

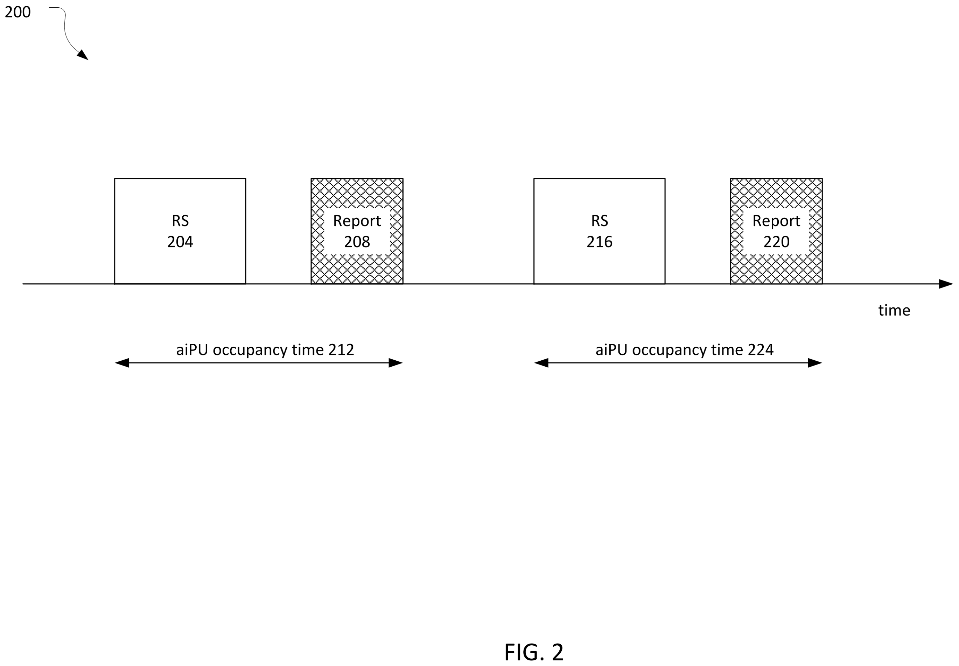

FIG. 2 illustrates an example timeline 200 for a periodic report, in accordance with some embodiments. The UE may receive a reference signal (RS) 204, which may correspond to a reference signal occasion for one or more reference signals, such as, CSI-RS, CSI-IM, and/or SSB. In some embodiments, the RS 204 may correspond to an RS set including two or more reference signals of different types. The RS set may include a single RS occasion for individual reference signals of the set.

The UE may perform one or more measurements based on the RS 204 and generate an inference based on the one or more measurements using an AI/ML model (e.g., for CSI estimation and/or CSI compression). The UE may generate a periodic report 208 for transmission based on the inference. An associated aiPU may be considered occupied for an occupation time 212 from the start (e.g., earliest symbol) of the RS 204 until an end (e.g., last symbol) of the report 208.

FIG. 2 further illustrates a subsequent RS 216, associated periodic report 220, and corresponding aiPU occupation time 224.

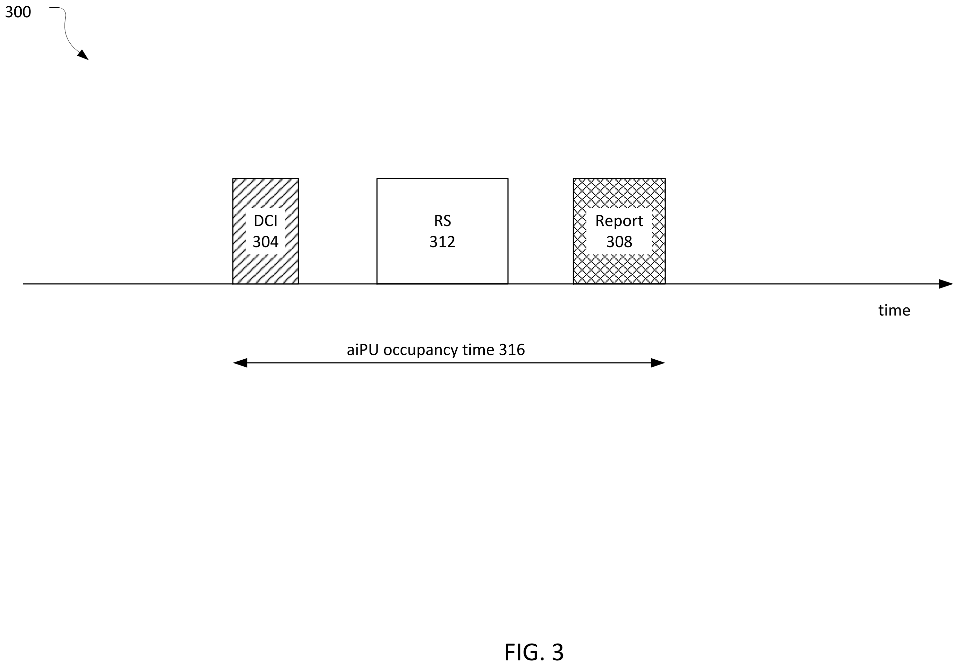

FIG. 3 illustrates an example timeline 300 for an aperiodic report, in accordance with some embodiments. The UE may receive a DCI 304 to trigger an aperiodic report 308. The UE may receive an RS 312 for the report, which may correspond to a reference signal occasion for one or more reference signals, such as CSI-RS, CSI-IM, and/or SSB. The UE may generate the aperiodic report 308 using an AI/ML function based on the one or more measurements. One or more aiPUs associated with the aperiodic report 308 may be considered occupied for an aiPU occupation time 316 that starts at the first (earliest) symbol after a PDCCH in which the DCI 304 is received and ends at the end (e.g., last symbol) of the report 308.

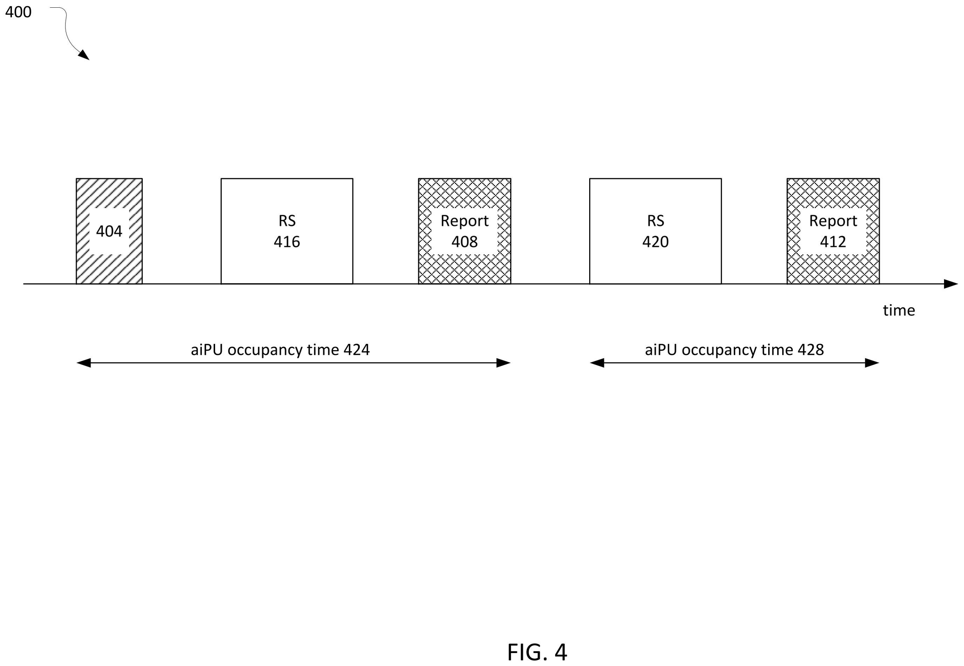

FIG. 4 illustrates an example timeline 400 for a semi-persistent report, in accordance with some embodiments. The UE may receive a triggering message 404 (e.g., a PDCCH that includes a DCI or a MAC-CE) to trigger multiple semi-persistent reports (e.g., an initial report 408 and one or more subsequent reports 412). The UE may generate the initial report 408 based on a first RS 416 and may generate the subsequent report 412 based on a second RS 420.

An aiPU occupancy time 424 for the initial report 408 may start in the first (earliest) symbol after triggering message 404 and end at the end (e.g., last symbol) of the initial report 408. An aiPU occupancy time 428 for the subsequent report 412 may run from the start (e.g., earliest symbol) of the second RS set 420 until an end (e.g., last symbol) of the subsequent report 412.

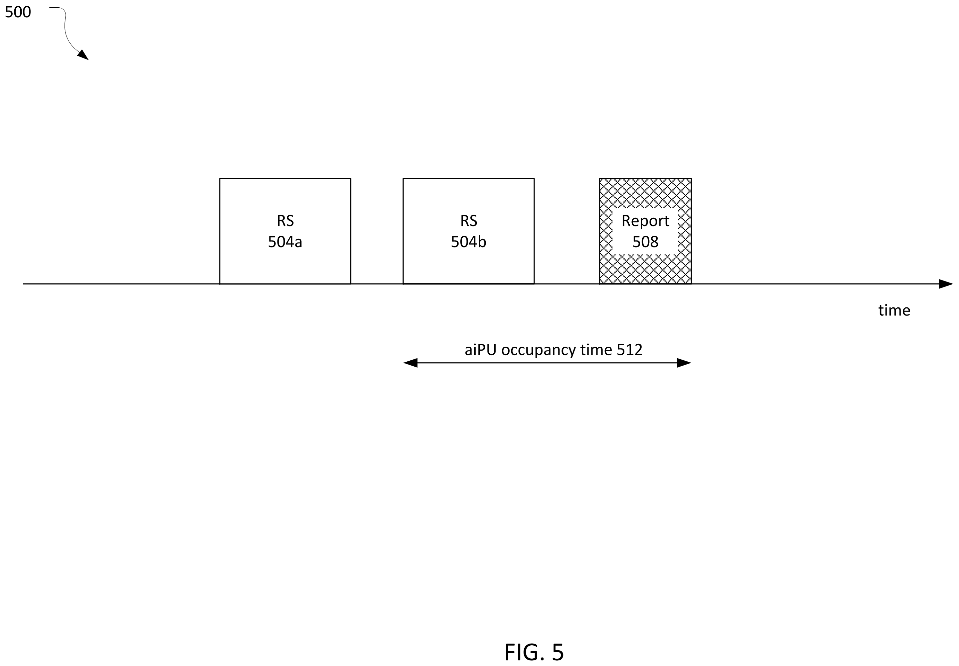

FIG. 5 illustrates another example timeline 500 for a periodic report and/or semi-persistent report (excluding the initial report), in accordance with some embodiments. In the timeline 500, multiple RS sets 504a-b may be transmitted in respective occasions. The UE may generate a report 508 for transmission based on the later RS set 504b (and not the earlier RS set 504a). Accordingly, the aiPU occupancy time 512 may run from the start of the later RS set 504b until the end of the report 508.

In some embodiments, the UE may perform measurements on multiple reference signal occasions (e.g., within a measurement window) for a same AI-based report. For example, the UE may use multiple reference signal occasions over a measurement window for AI-based beam management (e.g., case 2) and/or CSI prediction. For a periodic report and/or a subsequent semi-persistent report (e.g., excluding the initial report), the associated aiPU(s) may be occupied from the start (e.g., earliest symbol) of an earliest reference signal occasion that is used for the report until the end (e.g., last symbol) of the report.

In an example, a semi-persistent or periodic CSI report on PUSCH configured with the higher layer parameter codebookType set to "typeII-Doppler-r18" or "typeII-Doppler-PortSelection-r18", or reportQuantity set to "AI-beam-Case-2", occupies aiPU(s) from the first symbol of the Kₚ-th latest consecutive periodic/semi-persistent CSI-RS occasion no later than the CSI reference resource, until the last symbol of the PUSCH carrying the report. The value of Kₚ may be indicated by the UE in UE capability information.

For an AI-based report that is an aperiodic report and/or an initial semi-persistent report, the associated aiPU(s) may be occupied from the first (earliest) symbol after the PDCCH triggering the report until the last symbol of the PUSCH carrying the report.

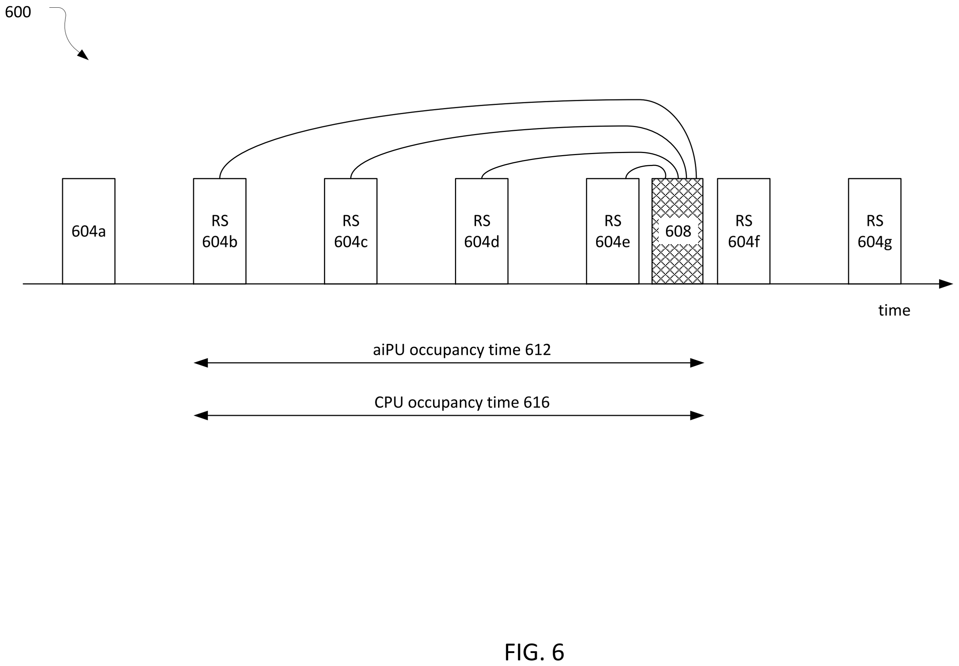

FIG. 6 illustrates an example timeline 600 for a periodic report based on multiple reference signal occasions, in accordance with various embodiments. The timeline 600 may also apply for a subsequent report for semi-persistent reporting (e.g., semi-persistent reports after the initial report).

As shown, the network may transmit a plurality of RSs 604a-g (e.g., CSI-RSs and/or SSBs) in respective reference signal occasions. The UE may be configured to transmit a report 608 based on a set of Kₚ reference signal occasions that are most recent and no later than a reference resource (which may be based on a timing of the report 608).

In the example of FIG. 6, Kₚ is 4 and the set of reference signal occasions includes RSs 604b-e. The aiPU(s) associated with the report 608 may be occupied for an aiPU occupancy time 612 that runs from a start (e.g., first symbol) of RS 604b (the earliest reference signal used for the report 608) until an end (e.g., last symbol) of the report 608.

In some embodiments, one or more CPUs may also be occupied for the report 608, e.g., for a CPU occupancy time 616 that runs concurrently with the aiPU occupancy time 612.

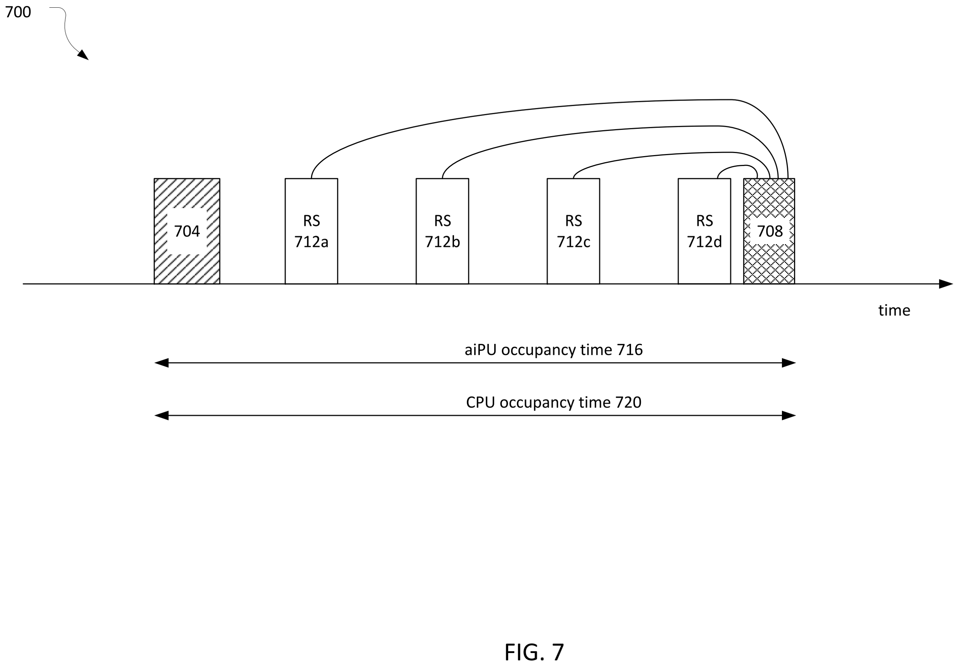

FIG. 7 illustrates an example timeline 700 for an aperiodic report based on multiple reference signal occasions. The timeline 700 may also be used for the initial semi-persistent report.

As shown, the UE may receive a DCI 704 to trigger an AI-based report 708 based on multiple reference signals 712a-d associated with respective reference signal occasions. The associated aiPU(s) may be occupied for an aiPU occupancy time 716 that starts at the first (earliest) symbol after a PDCCH that includes the DCI 704 and ends at the end (e.g., last symbol) of the report 708.

In some embodiments, one or more CPUs may also be occupied for the report 708, e.g., for a CPU occupancy time 720 that runs concurrently with the aiPU occupancy time 716.

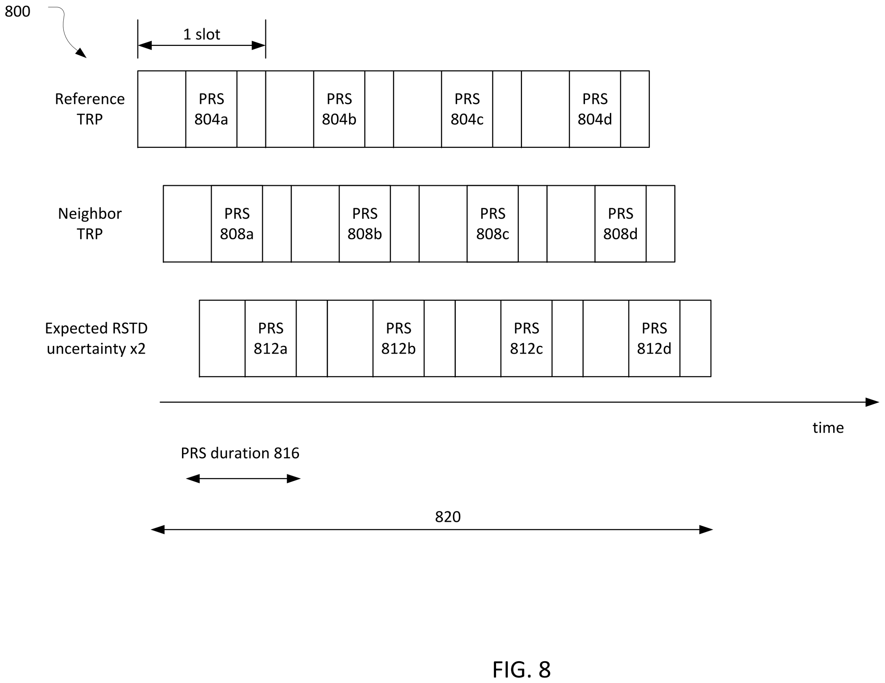

FIG. 8 illustrates an example timeline 800 for an AI-based positioning use case, in accordance with some embodiments. In some instances, the positioning use case may be treated differently than other AI/ML use cases since positioning may have looser delay requirements.

As shown, the UE may receive positioning reference signals (PRSs) 804a-d from a reference TRP, and PRSs 808a-d from a neighboring TRP in respective slots. The UE may generate position information using an AI-based model, e.g., based on one or more measurements on the PRSs 804a-d and/or 808a-d. The one or more measurements may include a reference signal time different (RSTD) between the PRSs of the different TRPs.

In some embodiments, the aiPU occupation time associated with PRS processing may be based on an expected RSTD uncertainty (e.g., a range of expected RSTD values). For example, FIG. 8 illustrates PRSs 812a-d representing double the expected RSTD uncertainty (×2).

In an example, a PRS duration 816 may be defined within individual slots. For example, the PRS duration 816 The PRS duration 816 for a first slot may correspond to the beginning of the PRS 804a from the reference TRP to an end of the PRS 812a representing double the expected RSTD uncertainty.

In some embodiments, the aiPU occupancy time for positioning may correspond to the sum of the PRS durations for respective slots over the set of slots in which PRS is transmitted for a positioning calculation. For example, the aiPU occupancy time may be the sum of the PRS duration 816 for each of the four slots illustrated in FIG. 8.

In other embodiments, the aiPU occupancy time may correspond to the sum of all slots in the set of slots over which PRS is transmitted for a positioning calculation. For example, the aiPU occupancy time may correspond to time period 820 illustrated in FIG. 8.

In some embodiments, processing criteria (e.g., aiPU restrictions) for AI-based positioning may be part of a broader (e.g., general) AI processing budget (e.g., along with other use cases, such as beam management and/or AI/ML-based CSI reporting). In other embodiments, AI-based positioning may have a separate AI processing budget, e.g., due to the longer delay tolerance of positioning report feedback.

In some embodiments, a number of aiPUs occupied for AI-based positioning may be based on a duration of downlink (DL) PRS symbols N (e.g., in units of ms) a UE can process every T ms assuming maximum DL PRS bandwidth in MHz, which may be supported and reported by the UE. In an example, the aiPU may be based on a reference time T_bar estimated from the duration described above. In another example, the aiPU may be based on the number of DL PRS symbols N_bar (e.g., in units of ms) that a UE can process every reference time T_bar (e.g., in units of ms).

In another example, the number of aiPUs occupied for AI-based positioning may be based on a maximum number of DL PRS resources that a UE can process in a slot. In an example, the aiPU may be based on the ratio between the maximum number of DL PRS resources that the UE can process in a slot under and a reference number of DL PRS resources that map to a single aiPU.

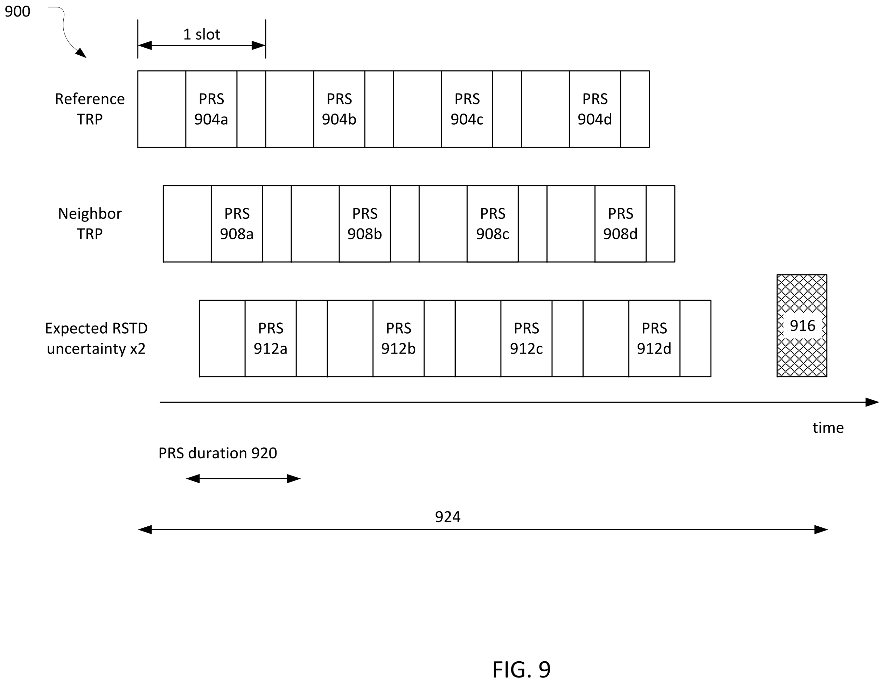

FIG. 9 illustrates another example timeline 900 of the AI-based positioning use case, in accordance with some embodiments. In the example of FIG. 9, the aiPU occupancy time may be further based on a report 916 in which the UE is to report the positioning information (e.g., based on the PRSs 904a-d from the reference TRP and/or the PRSs 908a-d from the neighbor TRP). FIG. 9 further illustrates representative PRSs 912a-d corresponding to double the expected RSTD uncertainty.

In an example, the aiPU occupancy time may correspond to the sum of PRS duration 920 in each respective slot plus a time from the PRSs until the end (e.g., last symbol) of the report 916.

In another example, the aiPU occupancy time may correspond to the sum of all slots in the set of slots over which PRS is transmitted for a positioning calculation until an end (e.g., last symbol) of the report 916. For example, the aiPU occupancy time may correspond to time period 824 illustrated in FIG. 8.

In some embodiments, the aiPU occupancy rules may work in conjunction with the CPU occupancy rules. Accordingly, the definitions of the occupancy time for aiPUs and/or CPUs may work in tandem. For example, the CPUs may be defined to cover measurements on reference signals. The aiPU occupancy time may cover the time needed to perform an AI-based inference based on the measurements and/or transmit a report based on the AI-based inference. Accordingly, the aiPU occupancy time may exclude the time period during which the corresponding reference signal is received. When the network configures the UE for AI-related reports, both CPU processing criterion and occupancy rules and AI processing criterion and occupancy rules may be required to be met. Otherwise, the UE may prioritize some reports over the other reports following prioritization rules.

In an example, for an AI-based report (e.g., a periodic, semi-persistent, and/or aperiodic report), the associated aiPU(s) may be occupied from the last symbol of the one or more reference signal resources associated with the report (e.g., a CSI-RS, CSI-IM, and/or SSB resource) until the end (e.g., last symbol) of the message (e.g., PUSCH and/or PUCCH) carrying the report.

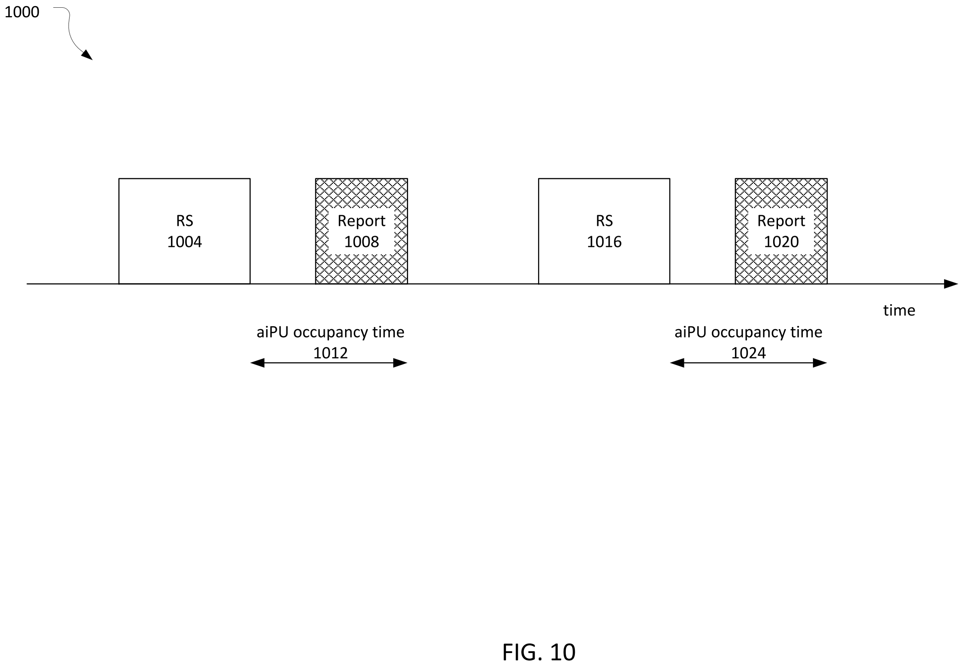

FIG. 10 illustrates an example timeline 1000 for a periodic report, in accordance with various embodiments. The timeline 1000 may also apply for a subsequent report for semi-persistent reporting (e.g., semi-persistent reports after the initial report).

The UE may receive a reference signal (RS) 1004, which may correspond to a reference signal occasion for one or more reference signals, such as, CSI-RS, CSI-IM, and/or SSB. In some embodiments, the RS 1004 may correspond to an RS set including two or more reference signals of different types. The RS set may include a single RS occasion for individual reference signals of the set.

The UE may perform one or more measurements based on the RS 1004 and generate an inference based on the one or more measurements using an AI/ML model (e.g., for CSI estimation and/or CSI compression). The UE may generate a periodic report 1008 for transmission based on the inference. An associated aiPU may be considered occupied for an aiPU occupancy time 1012 from the end (e.g., last symbol) of the RS 1004 until the end (e.g., last symbol) of the report 1008.

In another example, the aiPU occupancy time 1012 may end before the report 1008 (e.g., may end after a first symbol before the report or a first symbol of the report). For example, a CPU occupancy time may cover the time of the report 1008. In another example, the start and/or end of the aiPU occupancy time 1012 may be based on an offset. For example, the aiPU occupancy time 1012 may start an offset before the end of RS 1004 or an offset before the start of report 1008. In another example, the aiPU occupancy time 1012 may end an offset after the end of the report 1008. In some embodiments, the offset may be signaled by the UE to the network as a UE capability and/or configured by the network.

FIG. 10 further illustrates a subsequent RS 1016, associated periodic report 1020, and corresponding aiPU occupancy time 1024.

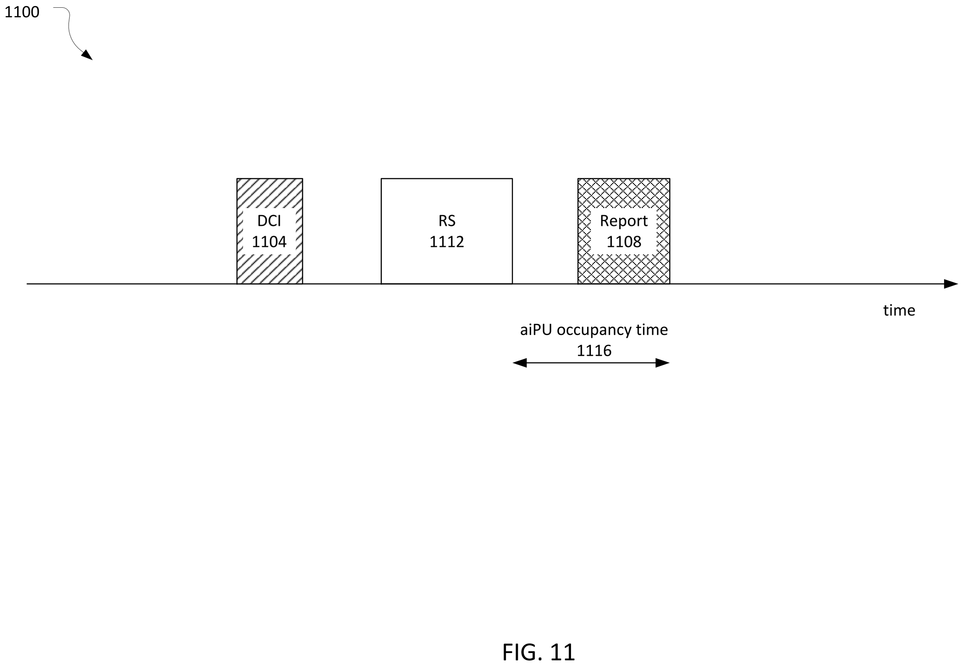

FIG. 11 illustrates an example timeline 1100 for an aperiodic report, in accordance with some embodiments. The timeline 1100 may also be used for an initial semi-persistent report.

The UE may receive a DCI 1104 to trigger an aperiodic report 1108 (or an initial semi-persistent report). The UE may receive an RS 1112 for the report 1108, which may correspond to a reference signal occasion for one or more reference signals, such as CSI-RS, CSI-IM, and/or SSB. The UE may generate the aperiodic report 1108 using an AI/ML function based on the one or more measurements. One or more aiPUs associated with the aperiodic report 1108 may be considered occupied for an aiPU occupation time 1116 that starts at the end (e.g., last symbol) of the RS 1112 and ends at the end (e.g., last symbol) of the report 1108.

In another example, the aiPU occupancy time 1116 may start at the start of the RS 1112, an offset before the end of RS 1112, or an offset before the start of the report 1108. In another example, the aiPU occupancy time 1116 may end before the report 1108 (e.g., may end after a first symbol before the report or a first symbol of the report). In another example, the end of the aiPU occupancy time 1116 may end an offset after the end of the report 1108. In some embodiments, the offset may be signaled by the UE to the network as a UE capability and/or configured by the network.

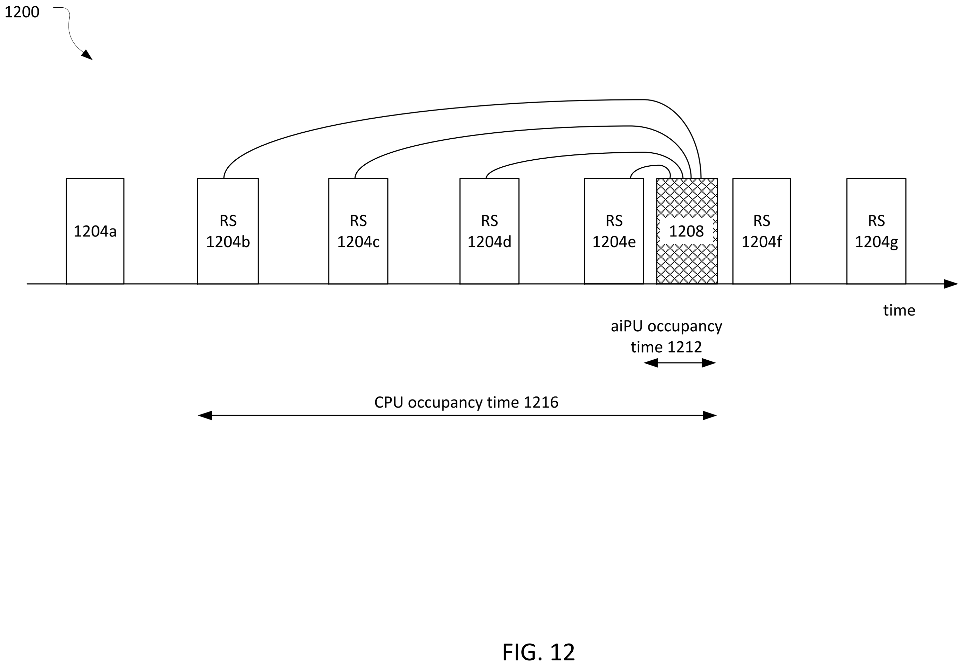

FIG. 12 illustrates an example timeline 1200 for a periodic report based on multiple reference signal occasions, in accordance with various embodiments. The timeline 1200 may also apply for a subsequent report for semi-persistent reporting (e.g., semi-persistent reports after the initial report).

As shown, the network may transmit a plurality of RSs 1204a-g (e.g., CSI-RSs and/or SSBs) in respective reference signal occasions. The UE may be configured to transmit a report 1208 based on a set of Kₚ reference signal occasions that are most recent and no later than a reference resource (which may be based on a timing of the report 1208).

In the example of FIG. 12, Kₚ is 4 and the set of reference signal occasions includes RSs 1204b-e. The CPU(s) associated with the report 1208 may be occupied for a CPU occupancy time 1212 that runs from a start (e.g., first symbol) of RS 1204b (the earliest reference signal used for the report 1208) until an end (e.g., last symbol) of the report 1208. Alternatively, the CPU occupancy time 1212 may end at the end (e.g., last symbol) of the last reference signal used for the report (e.g., the last symbol of RS 1204e).

In some embodiments, the aiPU occupancy time 1216 for one or more aiPUs associated with the report 1208 may run from the end (e.g., last symbol) of the last reference signal used for the report (e.g., the last symbol of RS 1204e) until the end (e.g., last symbol) of the report 1208.

In another example, the aiPU occupancy time 1212 may start at the start of one of the RSs 1204b-e, an offset before the end of RS 1204b, and/or an offset before the start of the report 1208. In another example, the aiPU occupancy time 1212 may end before the report 1208 (e.g., may end after a first symbol before the report or a first symbol of the report). In another example, the end of the aiPU occupancy time 1212 may end at an offset after the end of the report 1208. In some embodiments, the offset may be signaled by the UE to the network as a UE capability and/or configured by the network.

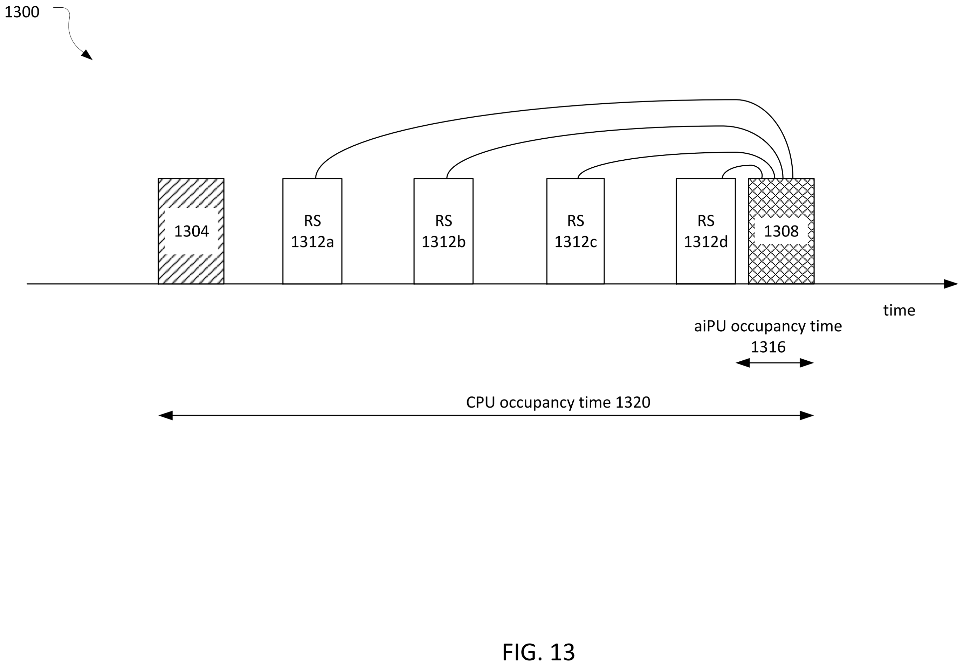

FIG. 13 illustrates an example timeline 1300 for an aperiodic report based on multiple reference signal occasions. The timeline 1300 may also be used for the initial semi-persistent report.

As shown, the UE may receive a DCI 1304 to trigger an AI-based report 1308 based on multiple reference signals 1312a-d associated with respective reference signal occasions. A CPU occupancy time 1316 for one or more CPUs associated with the report 1308 may start at the first (earliest) symbol after a PDCCH that includes the DCI 1304 and end at the end (e.g., last symbol) of the report 1308. Alternatively, the CPU occupancy time 1316 may end at the end (e.g., last symbol) of the last reference signal used for the report (e.g., the last symbol of RS 1312d).

The schemes for determining aiPU occupancy of FIGS. 2-9 (e.g., with aiPU occupancy including the time period of the reference signal and/or triggering message) may be beneficial when an AI-based function (e.g., using a UE-side model) is configured without a corresponding non-AI-based (e.g., legacy function), such as with some beam management and/or positioning configurations. Additionally, or alternatively, the schemes may be beneficial when an AI-based function with a UE-side model is configured without a corresponding function using a network-side model. Furthermore, the schemes of FIGS. 2-9 may enable independent counting of aiPUs and CPUs based on configured reports.

However, in situations in which an AI-based function using a UE-side model is configured along with a corresponding non-AI function (e.g., legacy function) and/or a network-side model, the schemes for determining aiPU occupancy of FIGS. 10-13 may be preferred. The schemes of FIGS. 10-13 may prevent and/or reduce overcounting of occupied processing resources across CPUs and aiPUs.

Embodiments herein further provide mechanisms to manage processing resources for data collection (e.g., measurements) associated with training an AI/ML model and/or monitoring performance of an AI/ML model. For a UE-side model, the UE may not transmit a report to the network with training data. However, limitations on reference signal measurements may still be needed to avoid scheduling more measurements in a slot than the UE is capable of handling.

In an example, measurements for training data may be configured by the network using the CSI framework with report quantity indicated as "none" (e.g., no report). The processing resources may be restricted based on extension of the CPU definition and/or introduction of a new aiPU-based definition.

For example, for a CSI report with a CSI report configuration *(CSI-ReportConfig*) with higher layer parameter *reportQuantity* set to "none" and a CSI-RS resource set (*CSI-RS-ResourceSet*) with higher layer parameter tracking reference signal information (*trs-Info*) not configured, the CPU(s) (or aiPU(s)) may be occupied for a number of OFDM symbols as follows: A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for AI-based data collection, such as L1-RSRP computation or channel matrix estimation or eigenvector calculation, power delay profile (PDP) and delay profile measurement, and/or channel impulse response (CIR) for positioning until symbols after the last symbol of the latest one of the CSI-RS/SSB resource for channel measurement for L1-RSRP computation or channel matrix estimation or eigenvector calculation, PDP and delay profile measurement, and/or CIR for positioning in each transmission occasion.

For aperiodic measurements for collecting training data, the CPU occupation rules may be extended (or aiPU occupation rules may be defined) as described below. For example, for a CSI report with *CSI-ReportConfig* with higher layer parameter *reportQuantity* set to 'none' and *CSI-RSResourceSet* with higher layer parameter *trs-Info* is not configured, the CPU(s) are occupied for a number of OFDM symbols as follows: An aperiodic CSI report occupies CPU(s) from the first symbol after the PDCCH triggering the CSI report until 'the last symbol between Zx symbols after the first symbol after the PDCCH triggering the CSI report and Zx' symbols after the last symbol of the latest one of each CSI-RS/SSB resource for channel measurement for L1-RSRP computation, or channel matrix estimation or eigenvector calculation, PDP and delay profile measurement and/or CIR for positioning.

For performance monitoring, the UE may perform measurements in a measurement window and ground truth measurements in a ground truth window. The ground truth measurements may be used to evaluate an inference of the AI/ML model that is based on the measurements in the measurement window. The reference signals for the measurement window and the ground truth window may be configured in separate resource sets. In some embodiments, the CPU occupancy may be extended to include the ground truth window.

In some instances, the performance monitoring report may include an average of multiple measurements over a relatively long time window. The CPU occupancy rules (or aiPU occupancy rules) may be extended to cover this scenario.

In an example, for a CSI report with *CSI-ReportConfig* with higher layer parameter *reportQuantity* set to 'none' or AI-performanceMonitoringMetric for a different AI-based report, and *CSI-RS-ResourceSet* with higher layer parameter *trs-Info* is not configured, the CPU(s) are occupied for a number of OFDM symbols as follows: A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for measurement window, until symbols after the last symbol of the latest one of the CSI-RS/SSB resource for ground truth measurement in each transmission occasion.

Some further embodiments related to associating (e.g., relating together) AI/ML model inferences and applicability reporting are described further below.

Performance monitoring for UE-side AI/ML model inference is a key feature in ensuring proper operation of such a model. According to current 3GPP agreement, the CSI framework for configuration of monitoring result report in L1 signaling may be supported for at least the monitoring Type 1 Option 2 of UE-side model monitoring (when applicable). Dedicated resource set(s) for monitoring and report configuration for monitoring may be configured in a dedicated CSI report configuration used for monitoring. The ID of an inference report configuration is configured in the configuration for monitoring to link the inference report configuration and monitoring report configuration.

For beam management case 1 (BM-Case1) and beam management case 2 (BM-Case2) with a UE-side AI/ML model, Type 1 performance monitoring may be supported. In a first option (Option 1), network-side performance monitoring may be used. The UE may send a report to the network for the calculation of a performance metric at the network. The measurement results from the resource set for monitoring, e.g., L1-RSRP and/or RS index may be supported as the content of the report. The report may be configured and/or triggered by the network.

In a second option (Option 2), the UE calculates the performance metric. The UE may report the performance metric and/or related information to the network.

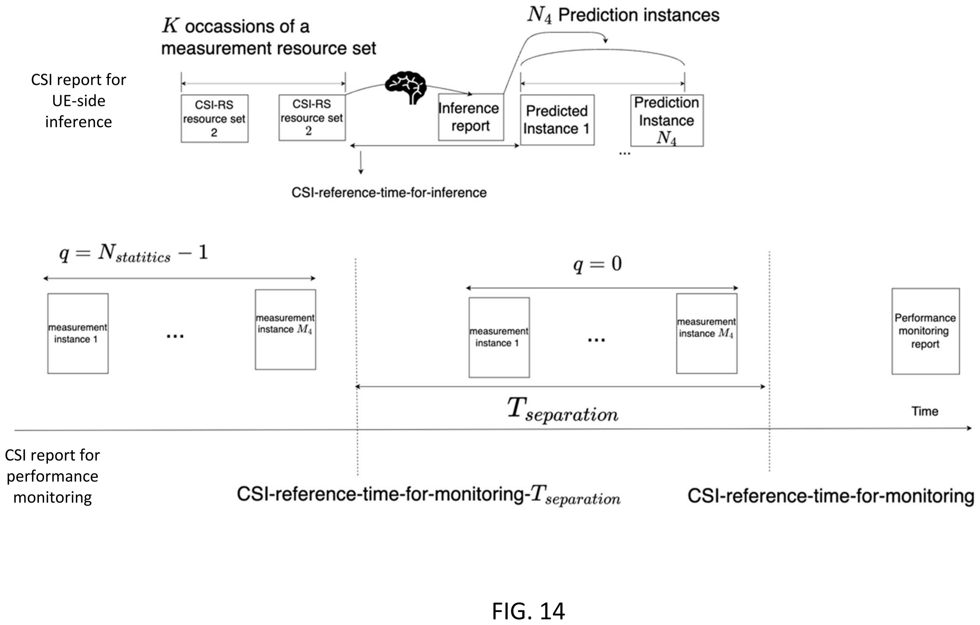

Performance monitoring may be separately configured from the CSI reporting with UE-side AI/ML inference. For UE-side model inference, for beam management case 1 (BM Case-1), one prediction instance may be generated for inference result which is reported in inference report. For beam management case 2 (BM Case-2), one or multiple prediction instances (*N*₄) are generated for inference result as shown in FIG. 14.

The CSI report for reporting UE-side model inference result may be aperiodic, periodic or semi-persistent. Thus for the same CSI report for inference, multiple prediction instances may be generated (e.g., a periodic CSI reports for BM Case-1 generates prediction every 80 ms, an aperiodic report is triggered at T1 which leads to a prediction instance for a slot at T1+20 ms, another aperiodic report is triggered at T1+30 ms which leads to a prediction instance for a slot at T1+80 ms, etc.). For the CSI report for performance monitoring, the measurement resource(s) may be aperiodic, periodic or semi-persistent. For BM Case-1 and BM Case-2, for aperiodic measurement resources, one measurement instance or multiple measurement instances for set A (or its subset) beam measurement (*M*₄) may be configured for beam prediction accuracy calculation as shown in FIG. 14.

In New Radio (NR), since 3GPP Release 15 (Rel-15), CSI reporting is self-contained, so the network does not need to refer to a previously received CSI report to parse the currently received CSI report. The same may be true for the CSI reporting on the UE side. For example, in terms of CSI computation at UE, CSI computation for one CSI report does not have any dependence on the CSI computation for another. However, there may be a need to "couple" the inference result prediction instances from the UE-side model and the set A (or its subset) beam measurement instances . The coupled prediction instance(s) and measurement instance(s) may be used in calculating beam prediction accuracy.

Embodiments provide a procedure to associate or "couple" inference prediction instances from the UE-side model and the set A (or its subset) beam measurements. To avoid frequent performance monitoring reports, it is beneficial for a UE to accumulate statistics regarding beam prediction accuracy and report the statistics, rather than send beam prediction accuracy in a one-shot fashion.

As the timing relationship involved in the procedure is complicated, the procedure to generate one-shot beam prediction accuracy is described first below.

According to the feedback timing of the performance monitoring CSI report, a CSI reference time for the performance monitoring CSI report (e.g., CSI-reference-time-for-monitoring) is determined, and up to *M*₄ measurement instances no later than the CSI reference time (CSI-reference-time-for-monitoring) may be eligible for calculating beam prediction accuracy.

To simplify the determination of eligible prediction instances for beam prediction accuracy calculation, if the prediction instance(s) for the UE-side mode inference configuration is no later than the CSI-reference-time-for-monitoring, then the prediction instance may be eligible to be coupled with a measurement instance for beam prediction accuracy calculation. For periodic/semi-persistent CSI reporting for inference ( e.g., a periodic CSI reports for BM Case-1 generates prediction every 80 ms), as there can be multiple instances meeting the criterion, e.g., a prediction instance at 70 ms, another at 150 ms, only the latest prediction instance no longer than CSI-reference-time-for-monitoring is eligible for BM Case-1 inference reporting and BM Case-2 inference reporting if *N*₄ = 1. For BM Case-2 periodic inference reporting *N*₄ > 1, if the prediction instances for a report occasion are indexed as *Pr*(1,1)*, Pr*(1,2)*,* ..., *Pr*(1, *k*), *... Pr*(1, *N*₄), it may happen that prediction instances *Pr*(1,1), *Pr*(1,2), *..., Pr*(1*, k*) are no later than CSI-reference-time-for-monitoring, but *Pr*(1*, k +* 1), *... Pr*(1, *N*₄) are later than CSI-reference-time-for-monitoring.

In one scheme (scheme 1), beam prediction accuracy may be calculated between *k* prediction instances and *M*₄ measurement instances. In another scheme (scheme 2), if there are prediction instances for an earlier report occasion *Pr*(2,1)*, Pr*(2,2), ..., *Pr(2, k), Pr(2, k + 1), ... Pr(2, N*₄), prediction instances *Pr*(2, *k +* 1), ... *Pr*(2, *N*₄) may be used along with prediction instances *Pr*(1,1), *Pr*(1,2), *..., Pr*(1, *k*) for beam prediction accuracy calculation. Compared to scheme 1, UE needs to store the prediction results from an earlier CSI report for inference. Then at the UE side, if some prediction instance and/or measurement instance are not available for beam prediction accuracy calculation, it may be necessary to reflect the condition in the beam prediction accuracy (BPA) report.

For example, if a BPA matrix (BPAM) of dimensions *N*₄ × *M*₄ is calculated: each prediction instance's result (out of *N*₄) may be compared with each measurement instance (out of *M*₄). If a prediction instance is not available (e.g., following scheme 1) or a measurement instance is not available (e.g., due to overlap with a measurement gap), then a code state (e.g., "N/A") may be reserved for such a combination of prediction instance and measurement instance, e.g., *N*₄ = 2, *M*₄ = 3 with BPAM=[1 N/A 1; 0 N/A 1], where 1 indicates adequate beam prediction accuracy, 0 indicates inadequate beam prediction accuracy, N/A indicates the metric is not available. Such a solution may be used if there is a single coupling for the performance monitoring report.

To simplify the design, N/A may be converted to 0 in reporting, so BPAM=[1 0 1; 0 0 1]. To accumulate statistics regarding beam prediction accuracy, it may be assumed beam prediction accuracy (e.g., the BPA matrix at *N*₄ × *M*₄) is calculated for multiple times. As CSI-reference-time-for-monitoring is used for the latest time of BPA matrix generation as in the procedure for one-shot beam prediction accuracy (*BPAM*₀ denotes the generated beam prediction accuracy). For earlier times for BPA matrix generation, a time duration *Tₛₑₚₐᵣₐₜᵢₒₙ* and the number of times (*N_{statistics}*) for generating beam prediction accuracy ( BPA matrix) are configured by network. Thus, for earlier times generating beam prediction accuracy, instead of using CSI-reference-time-for-monitoring, CSI-reference-time-for-monitoring- *q* · *Tₛₑₚₐᵣₐₜᵢₒₙ*, 1 ≤ *q* ≤ *N_{statistics}* - 1 may be used to determine *M*₄ measurement instances and *N*₄ prediction instances, and generate beam prediction accuracy matrix *BPAM_{q},* 1 ≤ *q* ≤ *N_{statistics}* - 1.

To save on feedback overhead, the reported metric may be a summation of beam prediction accuracy: ${\sum }_{q = 0}^{{N}_{statistics}} B {PAM}_{q}$. To reduce the feedback size and provide most relevant feedback to network, for a given *q*, rules may be introduced so a prediction instance is used once in beam prediction accuracy calculation (e.g., the prediction instance is "coupled" with the nearest measurement instance, or the nearest measurement instance later than the prediction instance, or the nearest measurement instance earlier than the prediction instance etc.), or a measurement prediction instance may be used once in beam prediction accuracy calculation (e.g., the measurement instance is "coupled" with the nearest prediction instance, or the nearest prediction instance later than the measurement instance, or the nearest prediction instance earlier than the measurement instance etc.).

The performance monitoring CSI report may be considered to consume CPU in the conventional CPU pool for CSI. In an example, values Z/Z' may be introduced for performance monitoring which can be subcarrier spacing dependent. To account for additional effort to collect predicted results from the CSI report for inference, in determining eligible prediction instances, instead of CSI-reference-time-for-monitoring, CSI-reference-time-for-monitoring - Margin may be used to further relax UE processing time. For the case *N_{statistics}* > 1, CSI-reference-time-for-monitoring -Margin - *q* · *Tₛₑₚₐᵣₐₜᵢₒₙ*, 0 ≤ *q* ≤ *N_{statistics}* - 1. The margin may be specified and/or reported as a UE capability, and optionally subjected to network configuration if network chooses to use a larger margin than reported by UE.

Embodiments may also relate to AI beam management applicability reporting. In AI/ML beam management, with RRC configurations from network for UE-side model's inference to a UE, if the UE supports the RRC configurations for UE-side model's inference, the UE measures a number of measurement resources configured by the RRC configurations (set B), and uses part or all of the set B measurements as inputs from a UE-side model for beam management inference. The outputs of the UE-side model for beam management inference provide information regarding the beam information including beam indices, predicted RSRPs, etc. about Tx beams in another set (prediction beam set or set A). As a suitable UE-side model for beam management inference with the particular RRC configurations may or may not be present at UE, a handshaking procedure is needed to ensure the RRC configurations for UE-side model's inference are supported by the UE, and the UE is able to generate beam reporting accordingly.

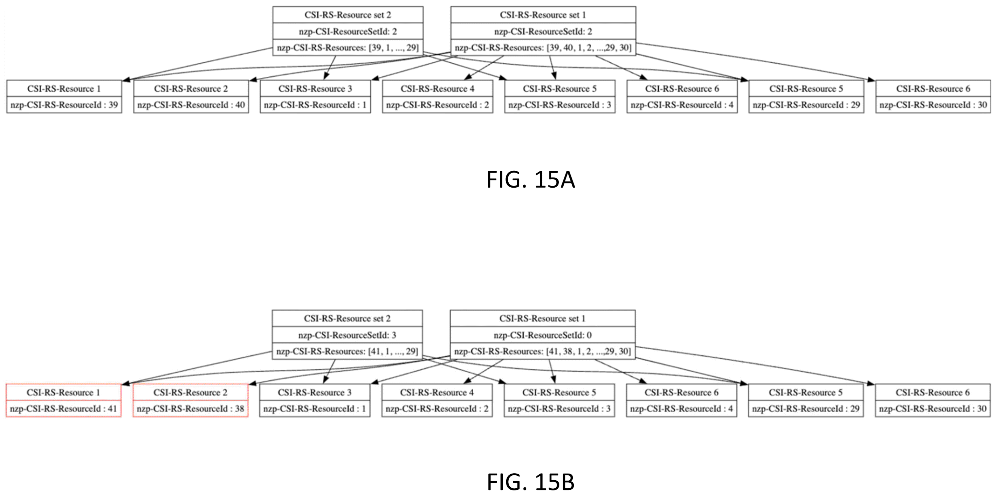

FIG. 15A illustrates an RRC configuration for training data collection, in accordance with some embodiments. FIG. 15B illustrates an RRC configuration for UE-side model inference, in accordance with some embodiments.

A single UE-side model may not be able to handle diverse 3GPP-specification transparent network configurations and deployment scenarios, as can be encountered in field deployment due to different network implementations and deployment choices (e.g., network equipment vendor A and network equipment vendor B may have different antenna module design, mobile operator C and mobile operator D have different cell sites in the same city, and/or mobile operator C may have different network optimization choices in two different cities). Accordingly, associated ID which may correspond to network implementation choices which a network vendor does not disclose, which may be needed for the hand-shaking procedure. Thus, a UE may find out a UE-side model present is suitable for current 3GPP-specification transparent network configuration and deployment scenario.

Regarding the hand-shaking procedure and associated ID, the network may provide configuration information associated with performance monitoring. The UE may perform UE assistance information reporting via OtherConfig. The applicability report of the UE may be based on the configuration.

In a first option (Option A), one or more of CSI-ReportConfig may be configured for inference configuration (e.g., where the associated ID may be configured in CSI framework). In a second option (Option B), one set or multiple sets of inference-related parameters may be configured for applicability report only (e.g., not for inference).

The set of inference-related parameters may correspond to parameters of the information elements (IEs) in and/or referred to by CSI-ReportConfig. For example, the inference-related parameters may include an associated ID, set A related information, set B related information, report content related information, time instances related information for measurements (e.g., for beam management (BM) case 2), and/or time instances related information for prediction (e.g., for BM case 2).

The UE reports applicability for all of the configurations (e.g., for Option A and/or Option B). For Option A, the applicable aperiodic CSI report and semi-persistent CSI report may be activated/triggered by the network after the applicability is reported.

Applicable periodic CSI report may be considered as activated if the applicability of the corresponding CSI-ReportConfig is reported in RRCReconfigurationComplete.

The network may optionally configure CSI-ReportConfig for inference configuration in RRCReconfiguration. The associated ID may be configured in CSI framework. The network may not need to configure CSI-ReportConfig for inference configuration in RRCReconfiguration if the UE is already configured with CSI-ReportConfic (e.g., in accordance with Option A).

It should be noted that during inference stage, set A beams may not be transmitted at all. However, during training data collection stage for AI/ML beam management with UE-side model, there are similar concepts like set A/set B as in inference, and beams for set A/set B are transmitted. Accordingly, the measurements from set B beams may be used as inputs (e.g., with suitable processing such as channel estimation, conversion from the signal strength (linear range) into signal power (dBm), etc.), and the measurements from set A for labels in model training (e.g., with suitable processing, one-hot encoding of top beams as labels for a UE side classification model, or RSRPs as labels for a UE-side regression model, etc.).

Two situations have been identified. In Situation 1, Set B is a subset of set A. In Situation 2, set B is not a subset of set A (e.g., set B is a set of SSBs (wide beams), and set A is a set of NZP CSI-RS resources (narrow beams).

For situation 1, for a set A (e.g., with 128 measurement resources for 128 Tx beams, with beam indices 1 to 128), when measurements are taken by a UE on those measurement resources for all the Tx beams, different set B compositions may be used. In one example, set B (now denoted as *B*₁) may include 16 measurement resources, and may be a subset of set A (e.g., with beam indices 1, 2, ..., 16). In another example, set B (now denoted as *B*₂) may include 32 measurement resources, and may be a subset of set A (e.g., with beam indices 1, 3, ..., 32). It can be seen that from the point of view of training data collection, from the reference signal transmission from the network (set A), multiple UE-side AI models with different set B compositions can be trained. Depending on whether a UE implements a single inference model for different set Bs (e.g., *B̃* = *B*₁ ∪ *B*₂, UE side trains an inference model *B̃* → *A*) or separate inference models for each set B (*B*₁ → *A* for model-1, *B*₂ → *A* for model-2) or multiple groups of set Bs ( (e.g., *B̃*₁ *= B*₁ ∪ *B*₂, UE side trains an inference model *B̃*₁ → *A, B̃*₂ *= B*₃ ∪ *B*₄, UE side trains an inference model *B̃*₂ → *A*)*.* With the two examples constructed above, the RRC signaling structures from network may correspond to:
CSIReport-Config-1: Associated ID=0XF122: configurations for resource set/resources of Set A/Set B1; and/or
CSIReport-Config-2: Associated ID=0XF122: configurations for resource set/resources of Set A/Set B1

As the same associated ID may be configured for both CSI Report-Config which may be used for training data collection and inference (additional configurations may be presented for either or both), in the applicability reporting stage it may not be enough for UE to check only the associated ID configured under CSI-ReportConfig to determine its applicability.

It is noted that set A's configuration through own nzp-CSI-RS-Resources SEQUENCE (SIZE (1..maxNrofNZP-CSI-RS-ResourcesPerSet)) OF NZP-CSI-RS-ResourceId establishes a bit sequence. And set B's configuration can be through a bitmap pointing to the NZP-CSI-RS resources. If the determination of set B within set A could be through the bitmap, e.g., if the same bitmap is used during training data collection and inference configuration, then the UE may assume the same set A/set B configurations during training and inference. However, for Option A, signaling for such a bitmap may not be available, as set B's configuration may be through its own nzp-CSI-RS-Resources SEQUENCE (SIZE (1..maxNrofNZP-CSI-RS-ResourcesPerSet)) OF NZP-CSI-RS-ResourceId.

For Option-A, network provides full configuration for CSI-ReportConfig including the resource sets configurations for set A and set B. The RRC configuration for legacy NZP CSI-RS-resourceSet is shown below:

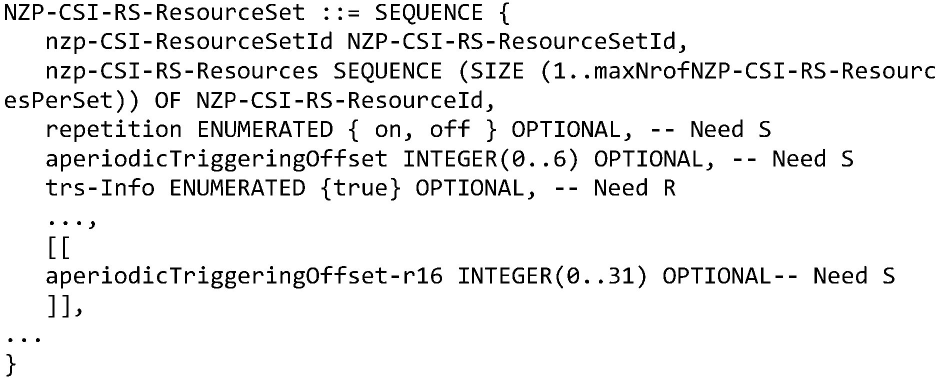

Set B4 may be configured with nzp-CSI-RS-Resources SEQUENCE {12,22}. Set B5 may be configured with nzp-CSI-RS-Resources SEQUENCE {22,12}. It should be clarified whether set B4 and set B5 lead to the same set B configuration.

If set B4 and set B5 lead to the same set B configuration, then the order of NZP-CSI-RS-ResourceIds under nzp-CSI-RS-Resources does not affect the set B configuration. If set B4 and set B5 are not considered the same configuration, another condition may be enforced to ensure in-order reference in set B of CSI-RS resources (this may be applicable to SSBs as well).

A consistency test may be used as follows.

In a first operation, the UE verifies there is no duplicate reference to NZP-CSI-RS-ResourceId in a NZP-CSI-RS-ResourceSet configuration for set A and for set B.

In a second operation, if NZP-CSI-RS-ResourceId-1 and NZP-CSI-RS-ResourceId-2 are both referred in a NZP-CSI-RS-ResourceSet configuration for set A and a NZP-CSI-RS-ResourceSet configuration for set B, if NZP-CSI-RS-ResourceId-1 comes before NZP-CSI-RS-ResourceId-2 in the SEQUENCE definition for set A, then NZP-CSI-RS-ResourceId-1 also comes before NZP-CSI-RS-ResourceId-2 in the SEQUENCE definition for set B. If this is violated in the RRC configuration, it may be considered a misconfiguration by network.

For Option-B to provide benefits over Option-A, Option-B's signaling overhead may need to be low, which may lead to a situation in which CSI-RS resource set/CSI-RS resources are not configured in the CSI-ReportConfig or in a new IE used for Option-B's configuration. Without actual configuration(s) of CSI-RS resource set/CSI-RS resources, the consistency test as for Option-A may not be conducted. Therefore, applicability reporting for Option 2 uses a bitmap for set B with respect to set A, which may be signaled by network for UE to determinate applicability. The associated ID may optionally be included as well.

Some agreements have been made to support aperiodic (AP) CSI-RS for inference. For example, for both BM-Case 1 and BM-Case 2, for UE-sided model for inference, when Set A and Set B are configured within CSI report configuration, two CSI-ResourceConfigIds may be configured for Set A and Set B separately. For a UE-sided model, in CSI-ReportConfig for inference, one or two associated IDs may be configured in CSI-ReportConfig. When Set B is equal to or a subset of set A (e.g., NZP-CSI-RS-ResourceId/SSB-Index in the resource set for Set B is within the NZP-CSI-RS-ResourceId/SSB-Index in the resource set for Set A), one associated ID may be configured. Otherwise, one associated ID may be configured for Set A and another one associated ID may be configured for Set B.

Accordingly, for a UE-side model inference, set A and set B may be configured in two CSI-ResourceConfigs for a CSI Report Config. One or two associated IDs are configured for CSI Report Config for inference. The CSI-ResourceConfig in legacy is shown below:

```
CSI-ResourceConfig ::= SEQUENCE {
  csi-ResourceConfigId CSI-ResourceConfigId,
  csi-RS-ResourceSetList CHOICE {
   nzp-CSI-RS-SSB SEQUENCE {
    nzp-CSI-RS-ResourceSetList SEQUENCE (SIZE (1..maxNrofNZP-CSI-RS-
    ResourceSetsPerConfig)) OF NZP-CSI-RS-ResourceSetId
     OPTIONAL, -- Need R
     csi-SSB-ResourceSetList SEQUENCE (SIZE (1..maxNrofCSI-SSB-
     ResourceSetsPerConfig)) OF CSI-SSB-ResourceSetId OPTIONAL-- Need R
     },
   csi-IM-ResourceSetList SEQUENCE (SIZE (1..maxNrofCSI-IM-
   ResourceSetsPerConfig)) OF CSI-IM-ResourceSetId
   },
 bwp-Id BWP-Id,
 resourceType ENUMERATED { aperiodic, semiPersistent, periodic },
  ...,
  [[
  csi-SSB-ResourceSetListExt-r17 CSI-SSB-ResourceSetId OPTIONAL-- Need R
  ]]
 }
 CSI-AperiodicTriggerState ::= SEQUENCE {
  associatedReportConfigInfoList SEQUENCE
 (SIZE(1..maxNrofReportConfigPerAperiodicTrigger)) OF CSI-AssociatedReportConfigInfo,
  ...,
  [[
  ap-CSI-MultiplexingMode-r17 ENUMERATED {enabled} OPTIONAL-- Need R
  ]]
 }
 CSI-AssociatedReportConfigInfo ::= SEQUENCE {
 reportConfigId CSI-ReportConfigId,
 resourcesForChannel CHOICE {
   nzp-CSI-RS SEQUENCE {
    resourceSet INTEGER (1..maxNrofNZP-CSI-RS-ResourceSetsPerConfig),
     qcl-info SEQUENCE (SIZE(1..maxNrofAP-CSI-RS-ResourcesPerSet)) OF TCI-StateId
     OPTIONAL-- Cond Aperiodic
     },
   csi-SSB-ResourceSet INTEGER (1..maxNrofCSI-SSB-ResourceSetsPerConfig)
   },
  csi-IM-ResourcesForInterference INTEGER(1..maxNrofCSI-IM-ResourceSetsPerConfig)
 OPTIONAL, -- Cond CSI-IM-ForInterference
 nzp-CSI-RS-ResourcesForInterference INTEGER (1..maxNrofNZP-CSI-RS-
 ResourceSetsPerConfig) OPTIONAL, -- Cond NZP-CSI-RS-ForInterference
  ...,
 }
```

In legacy aperiodic CSI reporting, the CSI measurement resource set(s) can be selected through the trigger state mechanism. One or more CSI reports (in the RAN1 terminology, beam reporting is also considered CSI report) through CSI-AssociatedReportConfigInfo can be linked to a trigger state, and one channel measure resources (CMR) is prescribed through *resourcesForChannel* so one out of the configured resource set(s) under CSI-ResourceConfig is selected.

It is noted that if aperiodic beam reporting is supported, the same CSI-ReportConfig may be linked to different CSI-AssociatedReportConfigInfo, thus potentially associated with different CSI measurement resource set(s). For UE-side model inference, as the associated ID(s) should be configured for CSI-ReportConfig, it may create a problem on how to derive the associated ID(s) for different CSI-AssociatedReportConfigInfo. To avoid such an issue, one or two associated IDs may be configured under CSI-AssociatedReportConfigInfo. An example of an updated configuration for CSI-AssociatedReportConfigInfo is shown below:

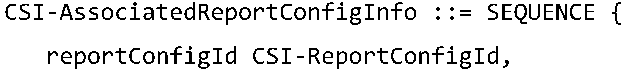

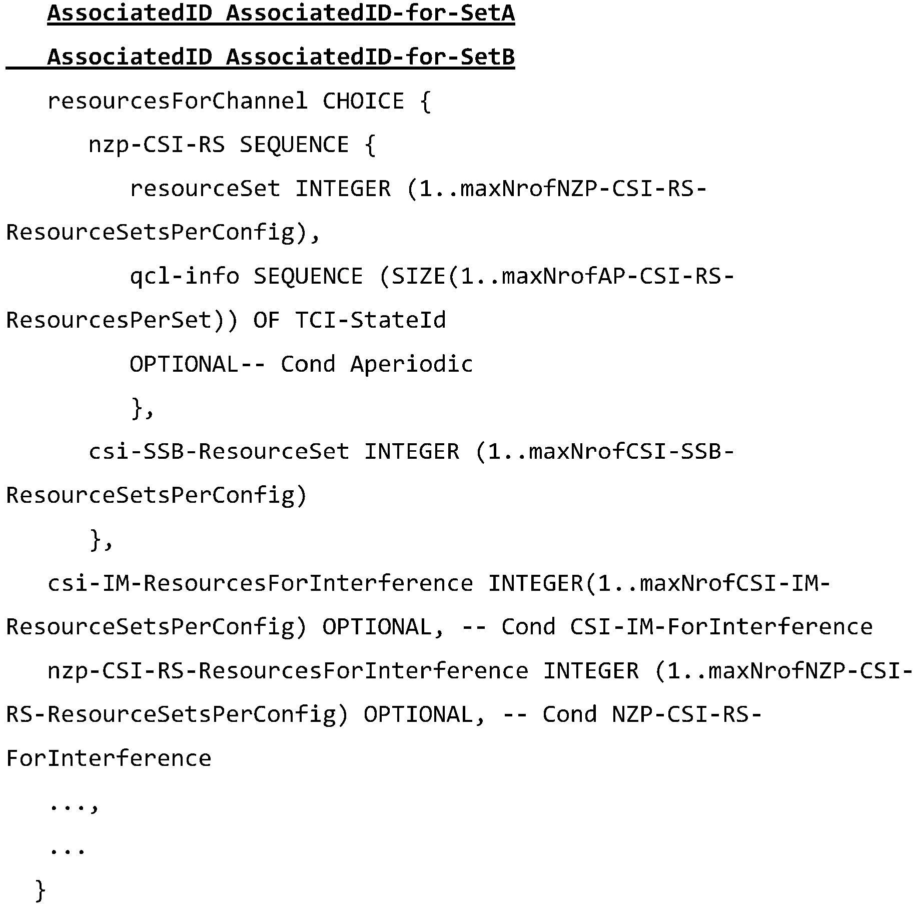

Alternatively, or additionally, the CSI-ResourceConfig may be updated as follows:

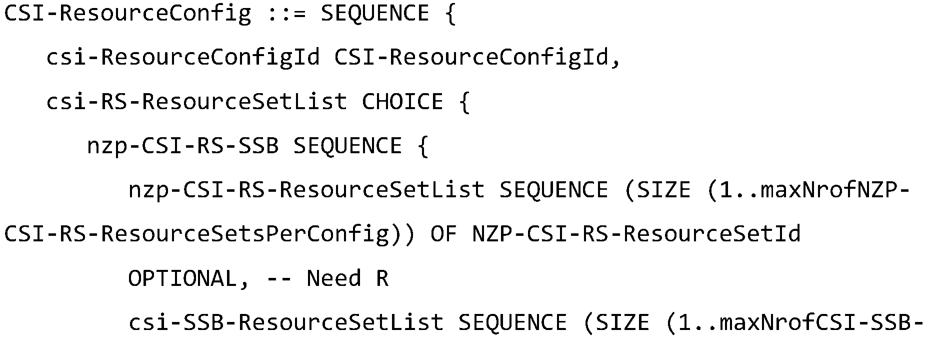

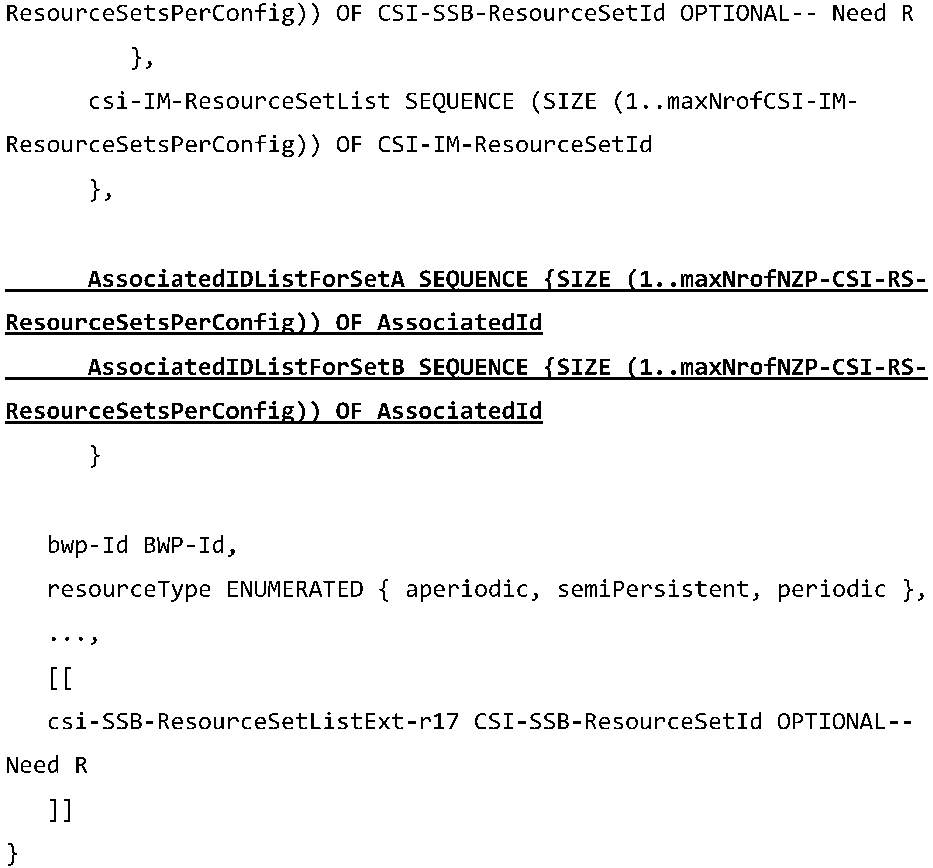

Embodiments may provide schemes associated with aperiodic CSI reporting (e.g., AI/ML beam management) when set B is a subset of set A and when set B is not a subset of set A. In an example, when set B is a subset of set A, an associated ID may be configured for each resource set under the ReSourceConfig for set A. The associated ID may be configured under a resource set, or as a list of associated IDs under ResourceConfig or CSI-ReportConfig.

In another example, when set B is a subset of set A, an associated ID may be configured at a trigger state for set A and/or set B.

In an example, when set B is not a subset of set A, an associated ID may be configured for each resource set under the ResourceConfig for set A. An associated ID may be configured for each resource set under the ResourceConfig or new IE for set B. The associated ID may be configured under a resource set, or as a list of associated IDs under ResourceConfig or two lists under CSI-ReportConfig.

In another example, a pair of associated IDs may be configured at a trigger state for set A and set B.

For inference, the aperiodic CSI-RS transmission for set B only may be sufficient. As the resource set indication for set A is used for UE in part for applicability reporting, and set A may not actually be transmitted, then the aperiodicTriggeringOffset may not be meaningful. It is desirable that the network can keep the set A the same, but adjust the set B selection through different trigger states (e.g., trigger state 1 is with set B-1, trigger state 1 is with set B-2), e.g., while a UE moves around (e.g., in area 1, set B-1 is preferred, in area 2, set B-2 is preferred). Thus the aperiodicTriggeringOffset configured for a resource set for set A may be ignored by UE for the UE-side model inference.

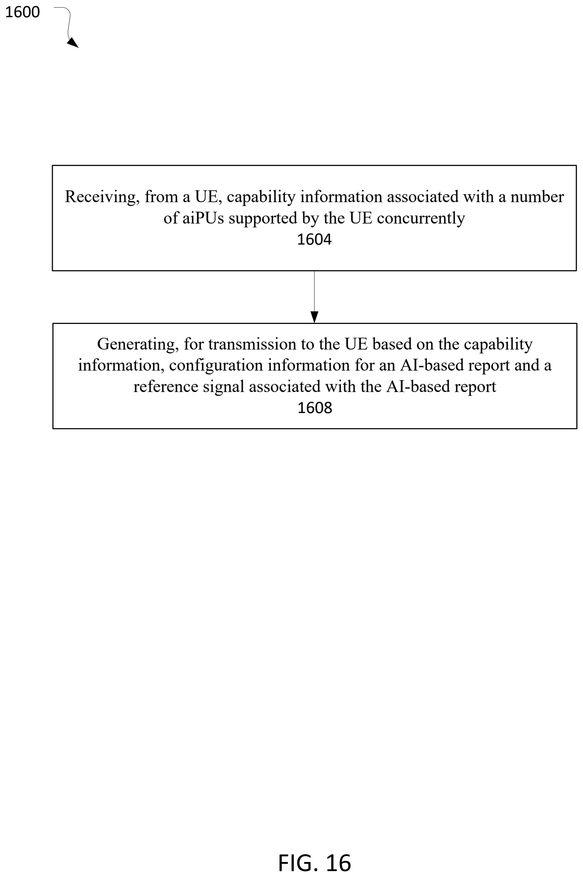

FIG. 16 is an operation flow/algorithmic structure 1600 in accordance with some embodiments. The operation flow/algorithmic structure 1600 may be implemented by a network device such as, for example, base station 108, network device 1700, or components thereof; for example, a baseband processor 1704A.

The operation flow/algorithmic structure 1600 may include, at 1604, receiving, from a UE, capability information associated with a number of aiPUs supported by the UE concurrently.

The operation flow/algorithmic structure 1600 may further include, at 1608, generating, for transmission to the UE based on the capability information, configuration information for an AI-based report and a reference signal associated with the AI-based report. For example, the configuration information may be generated in accordance with one or more aiPU occupancy rules. In an example, an aiPU occupancy time for an aiPU associated with the AI-based report may start after the reference signal. In another example, the aiPU occupancy time for the aiPU associated with the AI-based report may include a reference signal occasion of the reference signal. For example, the aiPU occupancy time may start at the beginning of the reference signal or at an earliest symbol after a PDCCH that triggers the AI-based report.

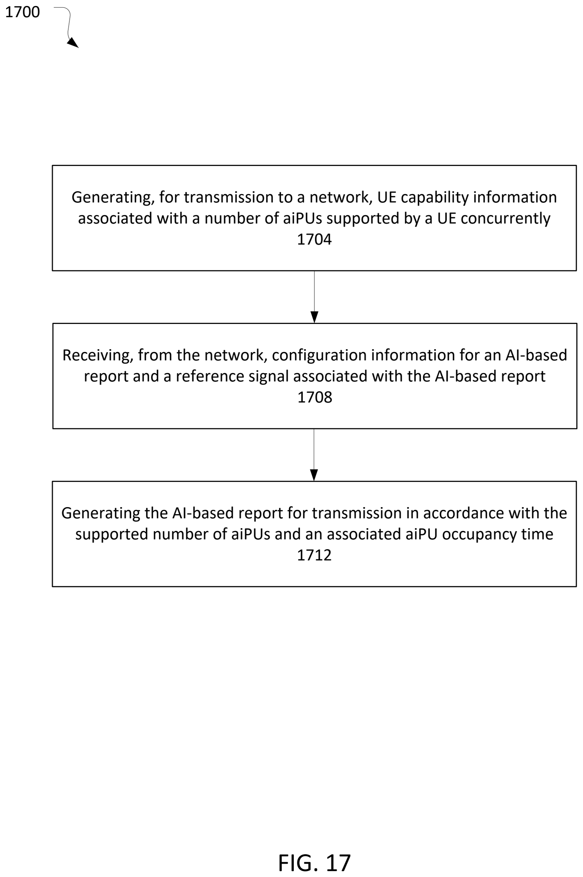

FIG. 17 illustrates another operation flow/algorithmic structure 1700 in accordance with some embodiments. The operation flow/algorithmic structure 1700 may be implemented by a UE such as, for example, UE 104, UE 1600, or components thereof; for example, a baseband processor 1604A.

The operation flow/algorithmic structure 1700 may include, at 1704, generating, for transmission to a network, UE capability information associated with a number of aiPUs supported by a UE concurrently.

The operation flow/algorithmic structure 1700 may further include, at 1708, receiving, from the network, configuration information for an AI-based report and a reference signal associated with the AI-based report.

The operation flow/algorithmic structure 1700 may further include, at 1712, generating the AI-based report for transmission in accordance with the supported number of aiPUs and an associated aiPU occupancy time. In an example, the aiPU occupancy time for a first aiPU associated with the AI-based report starts after the reference signal. In another example, the aiPU occupancy time for the aiPU associated with the AI-based report may include a reference signal occasion of the reference signal. For example, the aiPU occupancy time may start at the beginning of the reference signal or at an earliest symbol after a PDCCH that triggers the AI-based report.

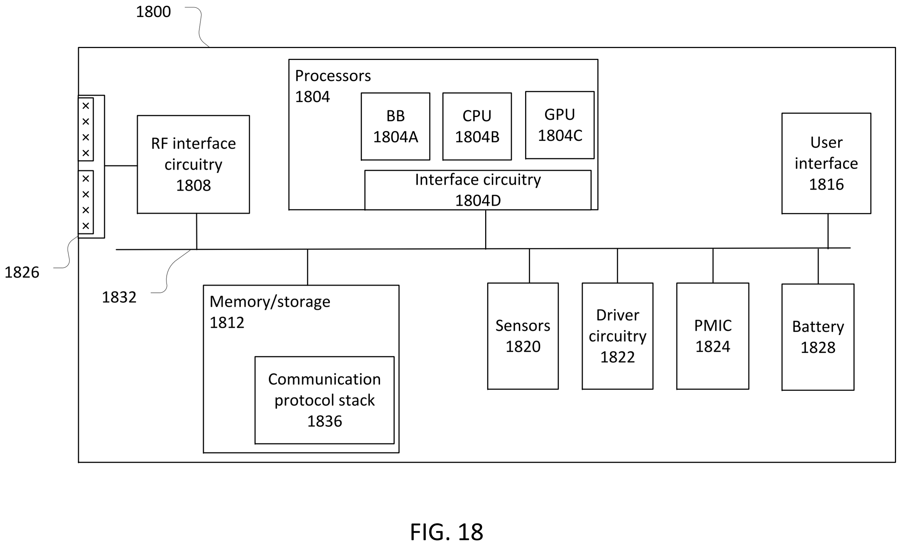

FIG. 18 illustrates a UE 1800 in accordance with some embodiments. The UE 1800 may be similar to and substantially interchangeable with UE 104.

The UE 1800 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 1800 may include processors 1804, RF interface circuitry 1808, memory/storage 1812, user interface 1816, sensors 1820, driver circuitry 1822, power management integrated circuit (PMIC) 1824, antenna 1826, and battery 1828. The components of the UE 1800 may be implemented as integrated circuits (ICs), portions thereof, discrete electronic devices, or other modules, logic, hardware, software, firmware, or a combination thereof. In some embodiments, at least one of processors 1804 may include RF interface circuitry 1808. The block diagram of FIG. 18 is intended to show a high-level view of some of the components of the UE 1800. However, some of the components shown may be omitted, additional components may be present, and different arrangement of the components shown may occur in other implementations.

The components of the UE 1800 may be coupled with various other components over one or more interconnects 1832, which may represent any type of interface, input/output, bus (local, system, or expansion), transmission line, trace, or optical connection that allows various circuit components (on common or different chips or chipsets) to interact with one another.

The processors 1804 may include processor circuitry such as, for example, baseband processor circuitry (BB) 1804A, central processor unit circuitry (CPU) 1804B, and graphics processor unit circuitry (GPU) 1804C. The processors 1804 may include any type of circuitry or processor circuitry that executes or otherwise operates computer-executable instructions, such as program code, software modules, or functional processes from memory/storage 1812 to cause the UE 1800 to perform operations associated with aiPU capabilities as described herein. The processors 1804 may also include interface circuitry 1804D to enable communication by, for example, communicatively coupling the processor circuitry with one or more other components of the UE 1800.

In some embodiments, the baseband processor 1804A may access a communication protocol stack 1836 in the memory/storage 1812 to communicate over a 3GPP compatible network. In general, the baseband processor 1804A may access the communication protocol stack 1836 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 1808.

The baseband processor 1804A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 1812 may include one or more non-transitory, computer-readable media that includes instructions (for example, communication protocol stack 1836) that may be executed by one or more of the processors 1804 to cause the UE 1800 to perform various operations as described herein including, for example, operation flow/algorithmic structure 1700 of FIG. 17.

The memory/storage 1812 includes any type of volatile or non-volatile memory that may be distributed throughout the UE 1800. In some embodiments, some of the memory/storage 1812 may be located on the processors 1804 themselves (for example, memory/storage 1812 may be part of a chipset that corresponds to the baseband processor 1804A), while other memory/storage 1812 is external to the processors 1804 but accessible thereto via a memory interface. The memory/storage 1812 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1808 may include transceiver circuitry and a radio frequency front module (RFEM) that allows the UE 1800 to communicate with other devices over a radio access network. The RF interface circuitry 1808 may include various elements arranged in transmit or receive paths. These elements may include, for example, switches, mixers, amplifiers, filters, synthesizer circuitry, and control circuitry.

**In** the receive path, the RFEM may receive a radiated signal from an air interface via antenna 1826 and proceed to filter and amplify (with a low-noise amplifier) the signal. The signal may be provided to a receiver of the transceiver that down-converts the RF signal into a baseband signal that is provided to the baseband processor of the processors 1804.

**In** the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1826.

**In** various embodiments, the RF interface circuitry 1808 may be configured to transmit/receive signals in a manner compatible with NR access technologies.

The antenna 1826 may include antenna elements to convert electrical signals into radio waves to travel through the air and to convert received radio waves into electrical signals. The antenna elements may be arranged into one or more antenna panels. The antenna 1826 may have antenna panels that are omnidirectional, directional, or a combination thereof to enable beamforming and multiple input, multiple output communications. The antenna 1826 may include microstrip antennas, printed antennas fabricated on the surface of one or more printed circuit boards, patch antennas, or phased array antennas. The antenna 1826 may have one or more panels designed for specific frequency bands including bands in FR1 or FR2.

The user interface 1816 includes various input/output (I/O) devices designed to enable user interaction with the UE 1800. The user interface 1816 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1800.

The sensors 1820 may include devices, modules, or subsystems whose purpose is to detect events or changes in their environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1822 may include software and hardware elements that operate to control particular devices that are embedded in the UE 1800, attached to the UE 1800, or otherwise communicatively coupled with the UE 1800. The driver circuitry 1822 may include individual drivers allowing other components to interact with or control various input/output (I/O) devices that may be present within, or connected to, the UE 1800. For example, driver circuitry 1822 may include a display driver to control and allow access to a display device, a touchscreen driver to control and allow access to a touchscreen interface, sensor drivers to obtain sensor readings of sensors 1820 and control and allow access to sensors 1820, drivers to obtain actuator positions of electro-mechanic components or control and allow access to the electro-mechanic components, a camera driver to control and allow access to an embedded image capture device, audio drivers to control and allow access to one or more audio devices.

The PMIC 1824 may manage power provided to various components of the UE 1800. In particular, with respect to the processors 1804, the PMIC 1824 may control power-source selection, voltage scaling, battery charging, or DC-to-DC conversion.

A battery 1828 may power the UE 1800, although in some examples the UE 1800 may be mounted deployed in a fixed location and may have a power supply coupled to an electrical grid. The battery 1828 may be a lithium ion battery, a metal-air battery, such as a zinc-air battery, an aluminum-air battery, a lithium-air battery, and the like. In some implementations, such as in vehicle-based applications, the battery 1828 may be a typical lead-acid automotive battery.

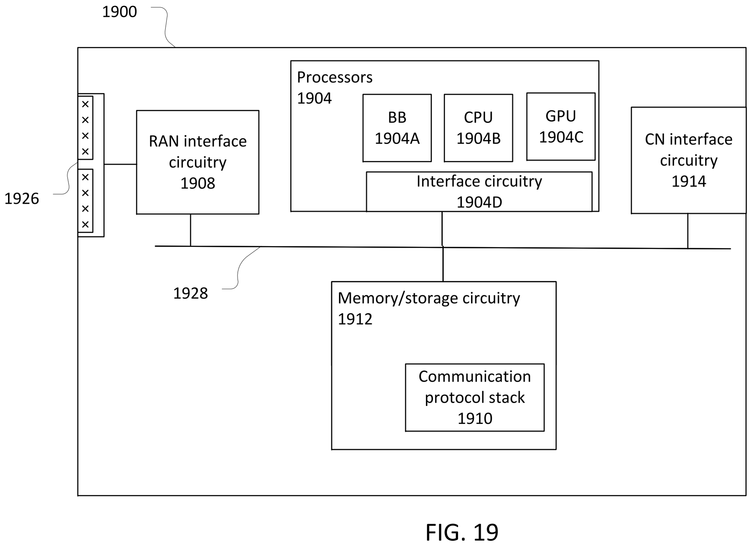

FIG. 19 illustrates a network device 1900 in accordance with some embodiments. The network device 1900 may be similar to and substantially interchangeable with base station 108 or a device of the core network 112 or external data network 120.

The network device 1900 may include processors 1904, RF interface circuitry 1908 (if implemented as a base station), core network (CN) interface circuitry 1914, memory/storage circuitry 1912, and antenna structure 1926.

The components of the network device 1900 may be coupled with various other components over one or more interconnects 1928.

The processors 1904, RF interface circuitry 1908, memory/storage circuitry 1912 (including communication protocol stack 1910), antenna structure 1926, and interconnects 1928 may be similar to like-named elements shown and described with respect to FIG. 18. In some embodiments, at least one of processors 1904 may include RF interface circuitry 1908.

The processors 1904 may include processor circuitry such as, for example, baseband processor circuitry (BB) 1904A, central processor unit circuitry (CPU) 1904B, and graphics processor unit circuitry (GPU) 1904C. The processors 1904 may include any type of circuitry or processor circuitry that executes or otherwise operates computer-executable instructions, such as program code, software modules, or functional processes from memory/storage circuitry 1912 to cause the network device 1900 to perform operations related to aiPU capabilities as described herein including, for example, operation flow/algorithmic structure 1600 of FIG. 16. The processors 1904 may also include interface circuitry 1904D to enable communication by, for example, communicatively coupling the processor circuitry with one or more other components of the network device 1900.

The CN interface circuitry 1914 may provide connectivity to a core network, for example, a 5^{th} Generation Core network (5GC) using a 5GC-compatible network interface protocol such as carrier Ethernet protocols, or some other suitable protocol. Network connectivity may be provided to/from the network device 1900 via a fiber optic or wireless backhaul. The CN interface circuitry 1914 may include one or more dedicated processors or FPGAs to communicate using one or more of the aforementioned protocols. In some implementations, the CN interface circuitry 1914 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

In the following sections, further exemplary embodiments are provided.

Example 1 includes a method comprising: receiving, from a user equipment (UE), capability information associated with a number of artificial intelligence (AI) processing units (aiPUs) supported by the UE concurrently; and generating, for transmission to the UE based on the capability information, configuration information for an AI-based report and a reference signal associated with the AI-based report, wherein an aiPU occupancy time for an aiPU associated with the AI-based report starts after the reference signal.

Example 2 includes the method of example 1, wherein the aiPU occupancy time starts at a last symbol of the reference signal.

Example 3 includes the method of example 1 or 2, wherein the aiPU occupancy time ends after transmission of the AI-based report.

Example 4 includes the method of any preceding example, wherein the reference signal is a last reference signal of a plurality of reference signals associated with the AI-based report.

Example 5 includes the method of any preceding example, wherein the AI-based report is an aperiodic report, a semi-persistent report, or a periodic report.

Example 6 includes the method of any preceding example, wherein generating the configuration information based on the capability information includes counting one or more aiPUs supported by the UE as occupied for the aiPU occupancy time.

Example 7 includes the method of any preceding example, wherein the capability information is first capability information, and wherein the method further comprises: receiving second capability information associated with a number of channel state information (CSI) processing units (CPUs) supported by the UE concurrently, wherein the configuration information is generated further based on the second capability information.

Example 8 includes the method of example 7, wherein the reference signal is a first reference signal, and wherein a CPU occupancy time for a first CPU associated with the AI-based report starts at an earliest symbol of an earliest reference signal associated with the AI-based report, wherein the earliest reference signal is the first reference signal or a second reference signal.

Example 9 includes the method of example 7 or 8, wherein a start of a CPU occupancy time for a first CPU associated with the AI-based report is an earliest symbol after a physical downlink control channel (PDCCH) that triggers the AI-based report.

Example 10 includes the method of any of examples 7-9, wherein the AI-based report is associated with an AI / machine learning (ML) model, and wherein the method further comprises: generating a message, for transmission to the UE, to configure data collection resources for training the AI/ML model or monitoring resources for monitoring performance of the AI/ML model; and counting one or more of the CPUs supported by the UE as occupied during the data collection resources or the monitoring resources.

Example 11 includes the method of any preceding example, wherein the AI-based report is based on a channel state information (CSI) prediction model, a CSI compression model, or a beam management model.

Example 12 includes a method comprising: generating, for transmission to a network, user equipment (UE) capability information associated with a number of artificial intelligence (AI) processing units (aiPUs) supported by a UE concurrently; receiving, from the network, configuration information for an AI-based report and a reference signal associated with the AI-based report; and generating the AI-based report for transmission in accordance with the supported number of aiPUs, wherein an aiPU occupancy time for a first aiPU associated with the AI-based report starts after the reference signal.

Example 13 includes the method of example 12, wherein the aiPU occupancy time ends a last symbol of the AI-based report.

Example 14 includes the method of example 12 or 13, wherein the reference signal is a last reference signal of a plurality of reference signals associated with the AI-based report.

Example 15 includes the method of any of examples 12-14, wherein the AI-based report is an aperiodic report, a semi-persistent report, or a periodic report.

Example 16 includes the method of any of examples 12-15, wherein the capability information is first capability information, and wherein the method further comprises: generating second capability information associated with a number of channel state information (CSI) processing units (CPUs) supported by the UE concurrently, wherein the AI-based report is generated based further in accordance with the supported number of CPUs.

Example 17 includes the method of example 16, wherein the reference signal is a first reference signal, and wherein a CPU occupancy time for a first CPU associated with the AI-based report starts at an earliest symbol of an earliest reference signal associated with the AI-based report, wherein the earliest reference signal is the first reference signal or a second reference signal.

Example 18 includes the method of example 16 or 17, wherein a start of a CPU occupancy time for a first CPU associated with the AI-based report is an earliest symbol after a physical downlink control channel (PDCCH) that triggers the AI-based report.

Example 19 includes the method of any of examples 16-18, wherein the AI-based report is associated with an AI / machine learning (ML) model, and wherein the method further comprises: receiving, from the network, a message to configure data collection resources for training the AI/ML model or monitoring resources for monitoring performance of the AI/ML model; and counting one or more of the CPUs supported by the UE as occupied during the data collection resources or the monitoring resources.

Example 20 includes the method of any of examples 12-19, wherein the AI-based report is based on a channel state information (CSI) prediction model, a CSI compression model, or a beam management model.

Example 21 includes a method comprising: generating, for transmission to a network, user equipment (UE) capability information associated with a number of artificial intelligence (AI) processing units (aiPUs) supported by a UE concurrently; receiving, from the network, configuration information for an AI-based report and a reference signal associated with the AI-based report; and generating the AI-based report for transmission in accordance with the supported number of aiPUs, wherein an aiPU occupancy time for a first aiPU associated with the AI-based report includes a reference signal occasion of the reference signal.

Example 22 includes the method of example 21, wherein the aiPU occupancy time ends after transmission of the AI-based report.

Example 23 includes the method of example 21 or 22, wherein the aiPU occupancy time starts at a first symbol of the reference signal occasion.

Example 24 includes the method of example 23, wherein the reference signal is an earliest reference signal of a plurality of reference signals associated with the AI-based report.

Example 25 includes the method of any of examples 21-24, wherein the aiPU occupancy time starts at an earliest symbol after a physical downlink control channel (PDCCH) that triggers the AI-based report.

Example 26 includes the method of any of examples 21-25, wherein the AI-based report is an aperiodic report, a semi-persistent report, or a periodic report.

Another example may include one or more non-transitory computer-readable media comprising instructions to cause an electronic device, upon execution of the instructions by one or more processors of the electronic device, to perform one or more elements of a method described in or related to any of examples 1-26, or any other method or process described herein.

Another example may include an apparatus comprising logic, modules, or circuitry to perform one or more elements of a method described in or related to any of examples 1-26, or any other method or process described herein.

Another example may include a method, technique, or process as described in or related to any of examples 1-26, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-26, or portions thereof.

Another example may include a signal as described in or related to any of examples 1-26, or portions or parts thereof.

Another example may include a datagram, information element, packet, frame, segment, PDU, or message as described in or related to any of examples 1-26, or portions or parts thereof, or otherwise described in the present disclosure.

Another example may include a signal encoded with data as described in or related to any of examples 1-26, or portions or parts thereof, or otherwise described in the present disclosure.

Another example may include a signal encoded with a datagram, IE, packet, frame, segment, PDU, or message as described in or related to any of examples 1-26, or portions or parts thereof, or otherwise described in the present disclosure.

Another example may include an electromagnetic signal carrying computer-readable instructions, wherein execution of the computer-readable instructions by one or more processors is to cause the one or more processors to perform the method, techniques, or process as described in or related to any of examples 1-26, or portions thereof.

Another example may include a computer program comprising instructions, wherein execution of the program by a processing element is to cause the processing element to carry out the method, techniques, or process as described in or related to any of examples 1-26, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
generating, for transmission to a network, user equipment (UE) capability information associated with a number of processing units (PUs) supported by a UE concurrently;
receiving, from the network, a channel state information (CSI) report configuration for an artificial intelligence (AI)-based task and a reference signal associated with the AI-based task; and
performing the AI-based task in accordance with the supported number of PUs, wherein a PU occupancy time for which a first PU associated with the AI-based report is occupied includes a reference signal occasion of the reference signal.

2. The method of claim 1, wherein performing the AI-based task includes generating a report for transmission to the network, wherein the PU occupancy time is based on a type of the report, wherein the type of the report is a periodic report, a semi-persistent report, or an aperiodic report.

3. The method of claim 1 or 2, wherein performing the AI-based task includes generating a report for transmission to the network, wherein the PU occupancy time ends after transmission of the report.

4. The method any of claims 1-3, wherein performing the AI-based task includes generating a semi-persistent report or a periodic report for transmission to the network, and wherein the PU occupancy time starts at a first symbol of the reference signal occasion; and, optionally,
wherein the reference signal is an earliest reference signal of a plurality of reference signals associated with the semi-persistent report or the periodic report.

5. The method of any of claims 1-4, wherein performing the AI-based task includes generating an aperiodic report for transmission to the network, and wherein the PU occupancy time starts at an earliest symbol after a physical downlink control channel (PDCCH) that triggers the aperiodic report.

6. The method of any of claims 1-5, wherein performing the AI-based task includes generating an initial report of semi-persistent reports for transmission to the network, and wherein the first PU is occupied from an earliest symbol after a first message that triggers the initial report until a last symbol of a second message that carries the initial report.

7. The method of any of claims 1-6, wherein the AI-based task is based on a predicted channel state information (CSI) or an estimated CSI reference signal (CSI-RS).

8. The method of any of claims 1-7, wherein the number of PUs supported by the UE concurrently is a first number of PUs associated with an AI-based report, and wherein the UE capability information further includes a second number of PUs supported by the UE concurrently for a non-AI-based report.

9. Processor circuitry to:
generate, for transmission to a network, user equipment (UE) capability information associated with a number of processing units (PUs) supported by a UE;
receive, from the network, a channel state information (CSI) report configuration with a report quantity set to none; and
obtain, based on the CSI report configuration, a measurement on a reference signal in accordance with the UE capability information, wherein a first PU of the UE is considered occupied for a number of symbols after a last symbol of the reference signal.

10. The processor circuitry of claim 9, wherein the measurement corresponds to training data or monitoring data for an artificial intelligence (AI) model.

11. The processor circuitry of claim 9 or 10, wherein the CSI report configuration is associated with a CSI reference signal (CSI-RS) resource set with a tracking reference signal information (trs-Info) parameter not configured.

12. The processor circuitry of any of claims 9-11, wherein the first PU is considered occupied from an earliest symbol of the reference signal or an earliest symbol after a message that triggers the measurement.

13. A method comprising:
receiving, from a user equipment (UE), UE capability information associated with a number of processing units (PUs) supported by a UE concurrently;
generating, for transmission to the UE, a channel state information (CSI) report configuration to configure an artificial intelligence (AI)-based task; and
generating, for transmission to the UE, a message to trigger the AI-based task based on a reference signal and in accordance with the supported number of PUs, wherein a PU occupancy time for which a first PU associated with the AI-based task is occupied includes a reference signal occasion of the reference signal.

14. The method of claim 13, wherein the AI-based task includes generation of an AI-based report, wherein the PU occupancy time is based on a type of the AI-based report, and wherein the type of the AI-based report is a periodic report, a semi-persistent report, or an aperiodic report; and, optionally,
wherein the AI-based report is a semi-persistent report or a periodic report and the first PU is occupied from an earliest symbol of the reference signal occasion until a last symbol of an uplink message that includes the semi-persistent report; or
wherein the AI-based report is an aperiodic report and wherein the first PU is occupied from an earliest symbol after the message to trigger the AI-based task until a last symbol of an uplink message that includes the aperiodic report.

15. The method of claim 13 or 14, wherein the CSI report configuration has a report quantity set to none, and the first PU is occupied for a number of symbols after the reference signal occasion; or
wherein the number of PUs supported by the UE concurrently is a first number of PUs associated with the AI-based task, and wherein the UE capability information further includes a second number of PUs supported by the UE concurrently for a non-AI-based report.
